# EUROPEAN PATENT APPLICATION

(11) **EP 2 738 662 A1**
(43) Date of publication of application: **04.06.2014**
(21) Application number: 13194966.1
(22) Date of filing: 28.11.2013
(51) Int. Cl.: G06F 3/0488, G06F 3/0481, G06F 3/0486

(54) **Apparatus and method of managing a plurality of objects displayed on touch screen**

(30) Priority: 30.11.2012 KR 20120138040
(71) Applicant: Samsung Electronics Co., Ltd, Gyeonggi-do 443-742 (KR)
(72) Inventor: Lee, Seung-Myung, 443-742 Gyeonggi-do (KR)
(74) Representative: Jenkins, Richard Gavin

(57) **Abstract**

A method and an apparatus of managing a plurality of objects displayed on a touch screen are provided. The method includes determining whether at least two objects of the plurality of objects have been touched simultaneously on the touch screen, determining whether at least one of the at least two objects has moved on the touch screen, if the at least two objects have been touched simultaneously, determining the distance between the touched at least two objects, if the at least one of the at least two objects has moved on the touch screen, combining the touched at least two objects into a set, if the distance between the touched at least two objects is less than a predetermined value, and displaying the set on the touch screen.

## Description

### TECHNICAL FIELD

The present disclosure relates to an apparatus and method of managing a plurality of objects displayed on a touch screen. More particularly, although not exclusively, the present disclosure relates to an apparatus and method of efficiently managing a plurality of objects displayed on a touch screen according to a user gesture.

### BACKGROUND

A touch screen is configured by combining a touch panel with a display device. Due to its advantage of convenient input of a user command without the need for a keyboard or a mouse, the touch screen is widely used in various electronic devices including a mobile device, a navigator, a Television (TV), an Automatic Teller Machine (ATM) of a bank, a Point Of Sale (POS) device in a shop, and the like.

For example, as a mobile device provides more and more services and additional functions, the mobile device displays Graphic User Interfaces (GUIs) on a touch screen.

To increase the utilization of the mobile device and satisfy various users' demands, a variety of applications are under development for execution in the mobile device.

Besides basic applications developed and installed in the mobile device by a manufacturer, the user of the mobile device can download applications from an application store over the Internet and install the applications in the mobile device. Third party developers may develop such applications and register them in application services on the Web. Accordingly, anyone can sell developed applications to mobile users on application stores. As a consequence, there are many applications that are available to mobile devices.

It is possible to store hundreds of applications in a recent mobile device such as a smartphone or a tablet PC, and shortcut keys are displayed as icons to execute the individual applications Thus, the user can execute an intended application in the mobile device by touching an icon representing the application on the touch screen. Besides the shortcut keys, many other visual objects such as widgets, pictures, and documents are displayed on the touch screen of the mobile device.

While various applications are provided to stimulate consumers' interest and satisfy their demands in the mobile device, the increase of applications available to the mobile device causes a problem. Specifically, too many applications are stored in the mobile device and a limited number of icons can be displayed on a small-size screen of the mobile device. The user may search for lists of applications to find an intended application, but such a search may take too much time.

Accordingly, it is necessary to sort and organize a large number of visual objects on the screen in view of the limited space of the screen. For example, it is necessary to conveniently manage a plurality of visual objects on the screen of the mobile device by editing, combining, moving, or deleting them. However, a user should touch each object multiple times to manage objects on a screen in a mobile device. When the objects are managed in a single folder, the screen of the mobile device should be switched to an edit screen and then each of the objects should be moved into the folder or a delete or amend command should be entered repeatedly to delete or amend objects in the folder. This edit process consumes time as is inconvenient.

The above information is presented as background information only to assist with an understanding of the present disclosure. No determination has been made, and no assertion is made, as to whether any of the above might be applicable as prior art with regard to the present disclosure.

### SUMMARY

Certain embodiments of the present invention aim to address at least the above-mentioned problems and/or disadvantages and to provide at least the advantages described below. Accordingly, an aim of certain embodiments of the present invention is to provide an apparatus and method of efficiently managing a plurality of objects displayed on a touch screen.

Another aim of certain embodiments of the present invention is to provide an apparatus and method of rapidly combining and separating a plurality of objects displayed on a touch screen.

Another aim of certain embodiments of the present invention is to provide an apparatus and method of readily locking or unlocking a plurality of objects displayed on a touch screen.

It is an aim of certain embodiments of the invention to solve, mitigate or obviate, at least partly, at least one of the problems and/or disadvantages associated with the prior art. Certain embodiments aim to provide at least one of the advantages described below.

In accordance with an aspect of the present invention, a method of managing a plurality of objects displayed on a touch screen is provided. The method includes: determining whether at least two of the plurality of objects have been touched simultaneously on the touch screen: determining whether at least one of the at least two objects has moved (e.g. has been moved with a user gesture, such as a touch and drag input) on the touch screen, if the at least two objects have been touched simultaneously; determining a distance between the touched at least two objects (e.g. determining a new, or current separation of the objects, that is a separation that has resulted from movement of one or more of the touched objects), if the at least one of the at least two objects has moved on the touch screen; combining the touched at least two objects into a set, if the distance between the touched at least two objects is less than a predetermined value; and displaying the set on the touch screen.

Thus, in certain embodiments, two objects that were initially displayed on separate portions or regions of the touch screen may be dragged together, and if they are dragged close enough together, they may be combined and displayed as a set (that is displayed in a common region of the screen allocated to that set).

The combining of the touched at least two objects may include reducing a size of at least one, or a size of each of the combined at least two objects. The reducing of the size may include scaling each of the combined at least two objects.

When the touched at least two objects contact each other (e.g. when the objects are dragged together so that they appear to touch) on the touch screen, the shape of at least one of the touched at least two objects may be changed and displayed in the changed at least one of the touched at least two objects. Thus, as the objects are dragged together and appear to touch, a shape of one or both of them may be modified; in other words, one or both of the objects may be displayed in a modified or changed form, representative, for example, of the objects being squashed, squeezed, or otherwise deformed as they are brought together. As the distance between the touched at least two objects decreases, the shapes of at least one of the touched at least two objects may be changed based on the distance between the touched at least two objects. In other words, the deformation or change of each object may increase as they are dragged closer together.

If the set (which includes at least two of the original plurality of objects) and another one object of the plurality of objects are touched simultaneously and moved within a predetermined distance, the touched another one object may be combined with the set into a new set and the new set may be displayed on the touch screen. Thus, in certain embodiments, objects may be dragged together and combined in a set, and then further objects may be added to the set by dragging together the set and the one or more further objects.

The set may be displayed in a display area for one of the objects. In other words, the set in certain embodiments may be displayed in a region, portion, or part of the screen that was initially (before the set was formed) displaying a single one of the original plurality of objects.

If the set is touched, the set may be enlarged and displayed enlarged on the touch screen.

If two points in the set are touched and moved away from each other, the set may be enlarged and displayed enlarged on the touch screen.

If the set is touched and shaken sideways on the touch screen, at least one object may be removed from the set and displayed outside of the set on the touch screen.

If the set is touched and a mobile device having the touch screen is shaken sideways, at least one object may be removed from the set and displayed outside of the set on the touch screen.

In accordance with another aspect of the present invention, a method of managing a plurality of objects displayed on a touch screen is provided. The method includes displaying the plurality of objects on the touch screen, sensing a touch of an input source (e.g. of a finger, stylus, pen, or other input means) on an object of the plurality of objects on the touch screen, sensing a twist (or rotation or circular motion or spiral motion) of the input source on the touched object, determining whether the input source has been twisted or rotated at/by or above a predetermined angle, and locking the touched object, if the input source has been twisted or rotated at/by or above the predetermined angle.

The method may further include determining whether the locked object has been touched, displaying a password input window on the touch screen, if the locked object has been touched, and unlocking the locked object, if a valid password has been input to the password input window.

The touched object may have different images before and after the locking or before and after the unlocking. In other words, the touched object may be displayed in different formats (i.e. have different appearances) depending on whether it is in the locked or unlocked state.

In accordance with another aspect of the present invention, a method of managing a plurality of objects displayed on a touch screen is provided. The method includes displaying initial images of the plurality of objects on the touch screen, storing an execution count of each of the plurality of objects displayed on the touch screen, and changing the initial image of at least one object of the plurality of objects to a replacement image, if the at least one object has an execution count less than a predetermined number during a first time period.The replacement image may include one of a scaled-down image of the initial image or an image having a lower color density than the initial image.

If the at least one object has not been executed during a second time period, the at least one object may be automatically deleted from the touch screen.

If the at least one object is executed during the second time period, the replacement image of the at least one object may be returned to the initial image of the object.

In accordance with another aspect of the present invention, a method of managing a plurality of objects displayed on a touch screen is provided. The method includes displaying a plurality of objects on the touch screen, the appearance of each object being dependent upon a number of times a respective application corresponding to the object has been executed in a predetermined period.

In accordance with another aspect of the present disclosure, an apparatus of managing a plurality of objects displayed on a touch screen is provided. The apparatus includes the touch screen configured to display the plurality of objects, and a controller configured to determine a distance between at least two objects, if the at least two objects have been touched simultaneously on the touch screen and at least one of the at least two objects has moved on the touch screen, and if the distance between the at least two objects is less than a predetermined value, to combine the at least two objects into a set and display the set on the touch screen.

Another aspect provides apparatus adapted to implement a method in accordance with any one of the above-described aspects or embodiments.

Another aspect of the invention provides a computer program comprising instructions arranged, when executed, to implement a method and/or apparatus in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

It will be appreciated from the following description that, in certain embodiments of the invention, features concerning the graphic design of user interfaces are combined with interaction steps or means to achieve a technical effect.

Certain embodiments aim to achieve the technical effect of enhancing the precision of an input device.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 is a block diagram of a mobile device according to an embodiment of the present disclosure;
FIG. 2 is a front perspective view of the mobile device according to an embodiment of the present disclosure;
FIG. 3 is a rear perspective view of the mobile device according to an embodiment of the present disclosure;
FIGS. 4A, 4B, 4C, 4D, and 4E illustrate a menu screen in a mobile device according to an embodiment of the present disclosure;
FIG. 5 is a flowchart illustrating a method of managing objects displayed on a touch screen according to an embodiment of the present disclosure;
FIGS. 6A, 6B, 6C, 6D, 6E, 6F, and 6G illustrate an operation of editing objects displayed on a touch screen according to an embodiment of the present disclosure;
FIGS. 7A, 7B and 7C illustrate an operation of editing objects displayed on a touch screen according to another embodiment of the present disclosure;
FIGS. 8A, 8B, 8C, 8D, 8E, and 8F illustrate an operation of editing objects displayed on a touch screen according to another embodiment of the present disclosure;
FIGS. 9A, 9B, 9C, and 9D illustrate a method of enlarging a set of combined objects on a touch screen according to an embodiment of the present disclosure;
FIGS. 10A, 10B, 10C, and 10D illustrate a method of enlarging a set of combined objects on a touch screen according to another embodiment of the present disclosure;
FIGS. 11A and 11B illustrate a method of enlarging combined objects on a touch screen according to another embodiment of the present disclosure;
FIGS. 12A, 12B, 12C, and 12D illustrate a method of separating a set of combined objects on a touch screen according to an embodiment of the present disclosure;
FIGS. 13A, 13B, 13C, and 13D illustrate a method of separating a set of combined objects on a touch screen according to another embodiment of the present disclosure;
FIGS. 14A, 14B, 14C, 14D, 14E, and 14F illustrate a method of locking and unlocking an object displayed on a touch screen according to an embodiment of the present disclosure;
FIGS. 15A, 15B and 15C illustrate a method of locking and unlocking an object displayed on a touch screen according to another embodiment of the present disclosure;
FIGS. 16A and 16B illustrate a method of locking and unlocking an object displayed on a touch screen according to another embodiment of the present disclosure;
FIGS. 17A, 17B, 17C, and 17D illustrate a method of managing objects displayed on a touch screen based on use of the objects according to an embodiment of the present disclosure;
FIGS. 18A, 18B, 18C, and 18D illustrate a method of managing objects displayed on a touch screen based on use of the objects according to another embodiment of the present disclosure; and
FIGS. 19A, 19B, 19C, 19D, and 19E illustrate a method of displaying a motion effect to an object on a touch screen according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Various embodiments of the present disclosure will be provided to achieve the above-described technical aspects of the present disclosure. In an implementation, defined entities may have the same names, to which the present disclosure is not limited. Thus, various embodiments of the present disclosure can be implemented with same or ready modifications in a system having a similar technical background.

While various embodiments of the present disclosure are described in the context of a hand-held mobile device, it is to be clearly understood that an apparatus and method of managing a plurality of objects displayed on a touch screen according to present disclosure are applicable to electronic devices equipped with a touch screen such as a navigator, a Television (TV), an Automatic Machine Teller (ATM) of a bank, and a Point Of Sale (POS) device of a shop, as well as mobile devices such as a portable phone, a smart phone, and a tablet Personal Computer (PC).

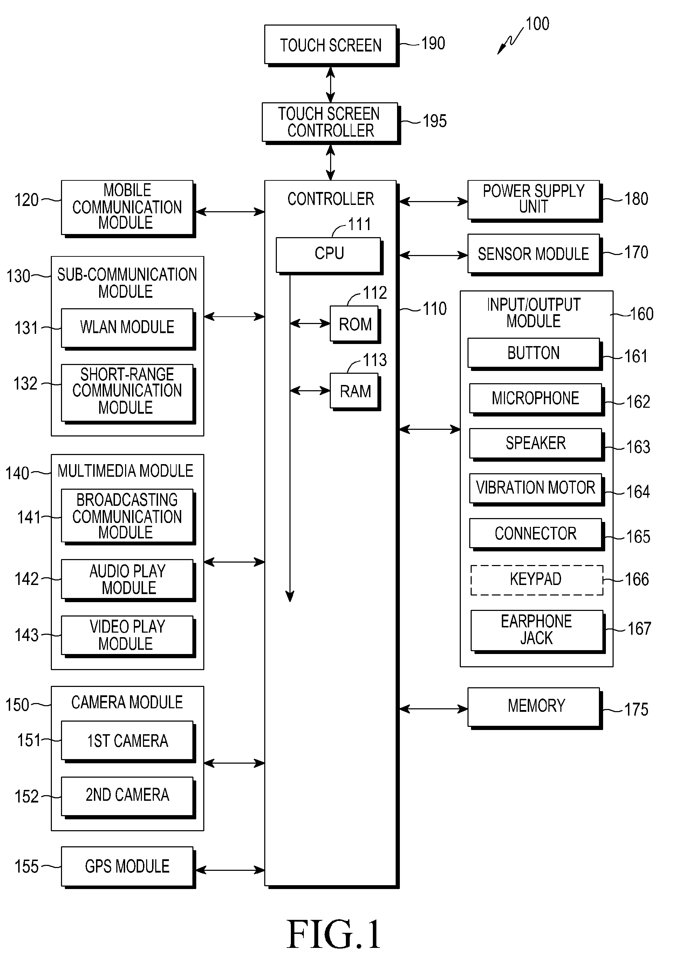

FIG. 1 is a block diagram of a mobile device according to an embodiment of the present disclosure.

Referring to FIG. 1, the mobile device 100 may be connected to an external device (not shown) through an external device interface such as a sub-communication module 130, a connector 165, and an earphone jack 167. The term 'external device' includes a variety of devices that can be detachably connected to the mobile device 100, such as an earphone, an external speaker, a Universal Serial Bus (USB) memory, a charger, a cradle, a docking station, a Digital Multimedia Broadcasting (DMB) antenna, a payment device, a health care device (e.g., a blood sugar meter, etc.), a game console, a vehicle navigator, etc. The external device' may also include a device connectable to the mobile device 100 via a wireless link, such as a Bluetooth® communication device, a Near Field Communication (NFC) device, a Wireless Fidelity (WiFi) Direct communication device, a wireless Access Point (AP), etc. In addition, the external device may be any of another mobile device, a portable phone, a smart phone, a tablet PC, a desktop PC, a server, etc.

Referring to FIG. 1, the mobile device 100 includes a display 190 and a display controller 195. The mobile device 100 further includes a controller 110, a mobile communication module 120, the sub-communication module 130, a multimedia module 140, a camera module 150, a Global Positioning System (GPS) module 155, an Input/Output (I/O) module 160, a sensor module 170, a memory 175, and a power supply 180. The sub-communication module 130 includes at least one of a Wireless Local Area Network (WLAN) module 131 and a short-range communication module 132, and the multimedia module 140 includes at least one of a broadcasting communication module 141, an audio play module 142, and a video play module 143. The camera module 150 includes at least one of a first camera 151 and a second camera 152, and the I/O module 160 includes at least one of a button 161, a microphone 162, a speaker 163, a vibration motor 164, the connector 165, a keypad 166, and the earphone jack 167. The following description is given with the appreciation that the display 190 is a touch screen and the display controller 195 is a touch screen controller, by way of example.

The controller 110 may include a Central Processing Unit (CPU) 111, a Read Only Memory (ROM) 112 that stores a control program to control the mobile device 100, and a Random Access Memory (RAM) 113 that stores signals or data received from the outside of the mobile device 100 or is used as a memory space for an operation performed by the mobile device 100. The CPU 111 may include any suitable number of cores. The CPU 111, the ROM 112, and the RAM 113 may be connected to one another through an internal bus.

The controller 110 may control the mobile communication module 120, the sub-communication module 130, the multimedia module 140, the camera module 150, the GPS module 155, the I/O module 160, the sensor module 170, the memory 175, the power supply 180, the touch screen 190, and the touch screen controller 195. The controller 110 provides overall control to the mobile device 100. Particularly when at least two objects displayed on the touch screen 190 are touched and dragged at the same time by an input and are placed a predetermined distance from each other or contact each other, the controller 110 may combine the touched objects into a set and display the set of the touched objects on the touch screen 190. In addition, the controller 110 may separate the combined set into individual objects. The controller 110 rescale (i.e., resize) of the objects on the touch screen 190. The controller 110 may lock or unlock the individual objects or the set of the objects. Further, the controller 110 may remove less frequently used objects a from the touch screen 190.

The mobile communication module 120 connects the mobile device 100 to an external device through one or more antennas (not shown) by mobile communication under the control of the controller 110. The mobile communication module 120 transmits wireless signals to or receives wireless signals from a portable phone (not shown), a smart phone (not shown), a tablet PC (not shown), or another electronic device (not shown) that has a phone number input to the mobile device 100, for a voice call, a video call, a Short Message Service (SMS), or a Multimedia Messaging Service (MMS).

The sub-communication module 130 may include at least one of the WLAN module 131 and the short-range communication module 132. For example, the sub-communication module 130 may include one or more of the WLAN module 131 and the short-range communication module 132.

The WLAN module 131 may be connected to the Internet at a location where a wireless AP (not shown) is installed. The WLAN module 131 supports the any suitable WLAN standard of the Institute of Electrical and Electronics Engineers (IEEE) such as IEEE 802.11x, for example. The short-range communication module 132 may conduct short-range wireless communication between the mobile device 100 and an image forming device (not shown) under the control of the controller 110. The short-range communication may be implemented by any suitable interface such as Bluetooth®, Infrared Data Association (IrDA), WiFi Direct, NFC, etc.

The mobile device 100 may include at least one of the mobile communication module 120, the WLAN module 131, and the short-range communication module 132. For example, the mobile device 100 may include a combination of the mobile communication module 120, the WLAN module 131, and the short-range communication module 132.

The multimedia module 140 may include the broadcasting communication module 141, the audio play module 142, or the video play module 143. The broadcasting communication module 141 may receive a broadcast signal (e.g., a TV broadcast signal, a radio broadcast signal, a data broadcast signal, etc.) and additional broadcasting information (e.g., an Electronic Program Guide (EPG), Electronic Service Guide (ESG), etc.) from a broadcasting station through a broadcasting communication antenna (not shown). The audio play module 142 may open a stored or received digital audio file (for example, a file having such an extension as mp3, wma, ogg, or wav). The video play module 143 may open a stored or received digital video file (for example, a file having such an extension as mpeg, mpg, mp4, avi, mov, or mkv). The video play module 143 may also open a digital audio file.

The multimedia module 140 may include the audio play module 142 and the video play module 143 without the broadcasting communication module 141. Alternatively, the audio play module 142 or the video play module 143 of the multimedia module 140 may be incorporated into the controller 110.

The camera module 150 may include at least one of the first camera 151 and the second camera 152 for capturing a still image or a video. Further, the first camera 151 or the second camera 152 may include an auxiliary light source (e.g., a flash (not shown)) for providing a light for capturing an image. The first camera 151 may be disposed on the front surface of the mobile device 100, while the second camera 152 may be disposed on the rear surface of the device 100. Alternatively, the first camera 151 and the second camera 152 may be arranged near to each other (e.g., the distance between the first camera 151 and the second camera 152 is between 1cm and 8cm) in order to capture a three-dimensional still image or video.

The GPS module 155 may receive radio waves from a plurality of GPS satellites (not shown) in orbit and determine a position of the mobile device 100 based on the Time of Arrivals (ToAs) of satellite signals from the GPS satellites to the mobile device 100.

The I/O module 160 may include at least one of the button 161, the microphone 162, the speaker 163, the vibration motor 164, the connector 165, and the keypad 166.

The button 161 may be formed on the front surface, a side surface, or the rear surface of a housing of the mobile device 100, and may include at least one of a power/lock button (not shown), a volume button (not shown), a menu button, a home button, a back button, a search button, etc.

The microphone 162 receives a voice or a sound and converts the received voice or sound into an electrical signal.

The speaker 163 may output sounds corresponding to various signals (e.g., a wireless signal, a broadcast signal, a digital audio file, a digital video file, a photo shot, etc.) received from the mobile communication module 120, the sub-communication module 130, the multimedia module 140, and the camera module 150. The speaker 163 may output sounds corresponding to functions (e.g., a button manipulation sound, a ringback tone for a call, etc.) performed by the mobile device 100. One or more speakers 163 may be disposed at an appropriate position or positions of the housing of the mobile device 100.

The vibration motor 164 may convert an electrical signal to a mechanical vibration. For example, when the mobile device 100 receives an incoming voice call from another device (not shown) in a vibration mode, the vibration motor 164 operates. One or more vibration motors 164 may be mounted inside the housing of the mobile device 100. The vibration motor 164 may operate in response to a user's touch on the touch screen 190 and a continuous movement of the touch on the touch screen 190.

The connector 165 may be used as an interface for connecting the mobile device 100 to an external device (not shown) or a power source (not shown). The connector 165 may transmit data stored in the memory 175 to the external device via a cable or may receive data from the external device via the cable. The mobile device 100 may receive power or charge a battery (not shown) from the power source via the cable connected to the connector 165.

The keypad 166 may receive a key input from the user to control the mobile device 100. The keypad 166 includes a physical keypad (not shown) formed in the mobile device 100 or a virtual keypad (not shown) displayed on the display 190. The physical keypad may not be provided according to the configuration of the mobile device 100.

An earphone (not shown) may be connected to the mobile device 100 by being inserted into the earphone jack 167.

The sensor module 170 includes at least one sensor for detecting a state of the mobile device 100. For example, the sensor module 170 may include a proximity sensor to detect whether the user is close to the mobile device 100, an illumination sensor (not shown) to detect the amount of ambient light around the mobile device 100, a motion sensor (not shown) to detect a motion of the mobile device 100 (e.g., rotation, acceleration, vibration, etc. of the mobile device 100), a geomagnetic sensor (not shown) to detect an orientation using the earth's magnetic field, a gravity sensor (not shown) to detect the direction of gravity, an altimeter (not shown) to detect an altitude by measuring the air pressure, and the like. At least one sensor may detect an environmental condition of the mobile device 100, generate a signal corresponding to the detected condition, and transmit the generated signal to the controller 110. A sensor may be added to or removed from the sensor module 170 according to the configuration of the mobile device 100.

The memory 175 may store input/output signals or data in accordance with operations of the mobile communication module 120, the sub-communication module 130, the multimedia module 140, the camera module 150, the GPS module 155, the I/O module 160, the sensor module 170, and the touch screen 190. The memory 175 may store a control program for controlling the mobile device 100 or the controller 110, and applications for the user to execute to interact.

The memory may include the memory 175, the ROM 112 and the RAM 113 within the controller 110, or a memory card (not shown) (e.g., a Secure Digital (SD) card, a memory stick, etc.) mounted to the mobile device 100. The memory may include a nonvolatile memory, a volatile memory, a Hard Disk Drive (HDD), a Solid State Drive (SSD), and the like.

The power supply 180 may supply power to one or more batteries (not shown) mounted in the housing of the mobile device 100. The one or more batteries supply power to the mobile device 100. Further, the power supply 180 may supply power received from an external power source (not shown) via the cable connected to the connector 165. The power supply 180 may also supply power received wirelessly from the external power source to the mobile device 100 by a wireless charging technique.

The touch screen 190 may provide User Interfaces (UIs) corresponding to various services (e.g., call, data transmission, broadcasting, photography, etc.) to the user. The touch screen 190 may transmit an analog signal corresponding to at least one touch on a UI to the display controller 195. The touch screen 190 may receive at least one touch input through a user's body part (e.g., a finger) or a touch input tool (e.g., a stylus pen). Also, the touch screen 190 may receive a touch input signal corresponding to a continuous movement of a touch among one or more touches. The touch screen 190 may transmit an analog signal corresponding to the continuous movement of the input touch to the touch screen controller 195.

In various embodiments of the present disclosure, a touch may include a noncontact touch (e.g. a detectable gap between the touch screen 190 and the user's body part or the touch input tool may be 1mm or less), and is not limited to contacts between the touch screen 190 and the user's body part or the touch input tool. The gap detectable to the touch screen 190 may vary according to the configuration of the mobile device 100.

The touch screen 190 may be implemented by, for example, a resistive type, a capacitive type, an infrared type, an acoustic wave type, or a combination of two or more of them.

The touch screen controller 195 converts an analog signal received from the touch screen 190 to a digital signal (e.g., X and Y coordinates). The controller 110 may control the touch screen 190 using the digital signal received from the touch screen controller 195. For example, the controller 110 may control selection or execution of a shortcut icon (not shown) displayed on the touch screen 190 in response to a touch. The touch screen controller 195 may be incorporated into the controller 110.

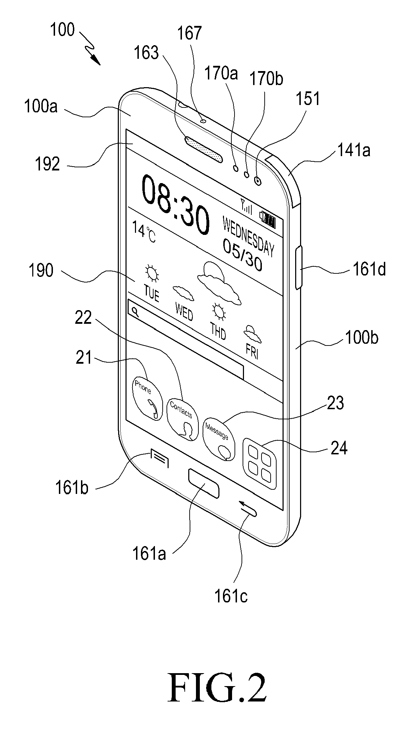

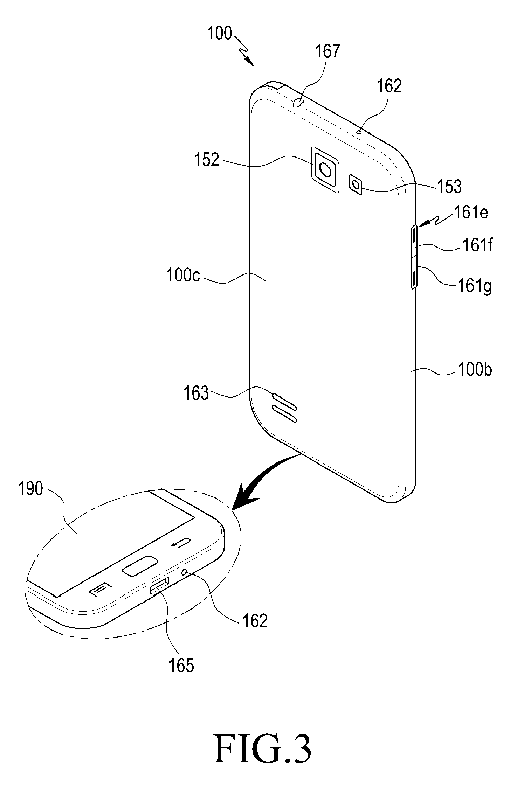

FIG. 2 is a front perspective view of a mobile device respectively according to an embodiment of the present disclosure and FIG. 3 is a rear perspective view of the mobile device according to an embodiment of the present disclosure.

Referring to FIG. 2, the touch screen 190 is disposed at the center of the front surface 100a of the mobile device 100, occupying most of the front surface 100a. In FIG. 2, a main home screen is displayed on the touch screen 190, by way of example. The main home screen is the first screen to be displayed on the touch screen 190 when the mobile device 100 is powered on. In the case where the mobile device 100 has different home screens, the main home screen may be the first of the home screens of the plurality of pages. Shortcut icons 21, 22 and 23 used to execute frequently used applications, a main menu switch key 24, a time, a weather, and so forth, may be displayed on the home screen. The main menu switch key 24 is used to display a menu screen on the touch screen 190. A status bar 192 may be displayed at the top of the touch screen 190 to indicate states of the mobile device 100 such as a battery charged state, a received signal strength, and a current time.

A home button 161a, a menu button 161b, and a back button 161c may be formed at the bottom of the touch screen 190.

The home button 161a is used to display the main home screen on the touch screen 190. For example, in response to touching the home button 161a while any other home screen than the main home screen or a menu screen is displayed on the touch screen 190, the main home screen may be displayed on the touch screen 190. In response to touching the home button 161a during execution of an application on the touch screen 190, the main home screen illustrated in FIG. 2 may be displayed on the touch screen 190. The home button 161a may also be used to display recently used applications or a task manager on the touch screen 190.

The menu button 161b provides link menus available on the touch screen 190. The link menus may include a widget adding menu, a background changing menu, a search menu, an edit menu, an environment setting menu, etc.

The back button 161c may display the screen previous to a current screen or end the latest used application.

The first camera 151, an illumination sensor 170a, the speaker 163, and a proximity sensor 170b may be arranged at a corner of the front surface 100a of the mobile device 100, whereas the second camera 152, a flash 153, and the speaker 163 may be arranged on the rear surface 100c of the mobile device 100.

A power/reset button 161d, a volume button 161e, including a volume up button 161f and a volume down button 161g, a terrestrial DMB antenna 141a to receive a broadcast signal, and one or more microphones 162 may be disposed on side surfaces 100b of the mobile device 100. The DMB antenna 141a may be mounted to the mobile device 100 fixedly or detachably.

The connector 165 is formed on the bottom side surface of the mobile device 100. The connector 165 includes a plurality of electrodes and may be electrically connected to an external device by a cable. The earphone jack 167 may be formed on the top side surface of the mobile device 100, to allow an earphone to be inserted.

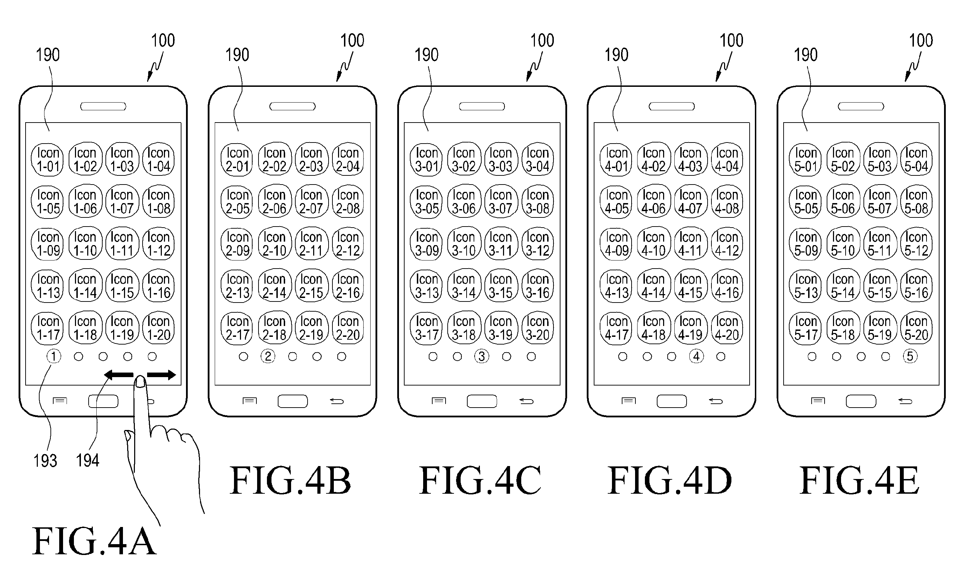

FIGS. 4A, 4B, 4C, 4D, and 4E illustrate a menu screen in a mobile device according to an embodiment of the present disclosure.

Referring to FIGS. 4A, 4B, 4C, 4D, and 4E, a menu screen is displayed on the touch screen 190. Various visual objects such as shortcut icons to execute applications in the mobile device 100, widgets, icons representing text in various file formats, photos, and folders are arranged in a matrix on the menu screen. The applications include applications stored in the mobile device 100 that are provided by a manufacturer of the mobile device 100. Further, the applications user purchased and user downloaded applications from the Internet. The objects may be represented as icons or buttons that are images, text, photos, or a combination of them. The menu screen displayed in FIGS. 4A, 4B, 4C, 4D, and 4E is different from a home screen illustrated in FIG. 2, however the menu screen may be used as a home screen.

Referring to FIGS. 4A, 4B, 4C, 4D, and 4E, the objects are shown as shortcut icons 1-01 to 5-20. The menu screen has 5 pages in total, each having 20 icons, by way of example. For example, FIG. 4A illustrates page 1 of the menu screen and includes 20 icons labeled as Icon 1-01 to Icon 1-20. Page 1 of the menu screen may be a main menu screen. In FIG. 4A, a page indicator 193 is displayed at the bottom of the touch screen 190 and indicates that a current page of the menu screen is page 1. FIG. 4B illustrates page 2 of the menu screen and displays 20 icons labeled as Icon 2-01 to Icon 2-20 on the touch screen 190. FIG. 4C illustrates page 3 of the menu screen and displays 20 icons labeled as Icon 3-01 to Icon 3-20 on the touch screen 190. FIG. 4D illustrates page 4 of the menu screen and displays 20 icons labeled as Icon 4-01 to Icon 4-20 on the touch screen 190. FIG. 4E illustrates page 5 of the menu screen and displays 20 icons labeled as Icon 5-01 to Icon 5-20 on the touch screen 190. The user may switch from one page to another page on the menu screen displayed on the touch screen 190 by flicking or dragging to the left or right in one of arrowed directions 194 on the touch screen 190. When an icon is touched, the controller 110 executes an application corresponding to the touched icon and displays the executed application on the touch screen 190.

As described above, many applications are stored in the mobile device 100 such as a smart phone, a tablet PC, or the like. Therefore, to execute an intended application in the mobile device 100, the user must turn one page after another on the menu screen as illustrated in FIGS. 4A to 4E until locating the intended application, which consumes time.

If icons representing correlated applications are collected at a predetermined position on the touch screen 190, the user may rapidly search for an intended icon or a related icons.

Accordingly, various embodiments of the present disclosure provide a method and apparatus of rapidly and easily managing visual objects such as icons displayed on the touch screen 190 of the mobile device 100.

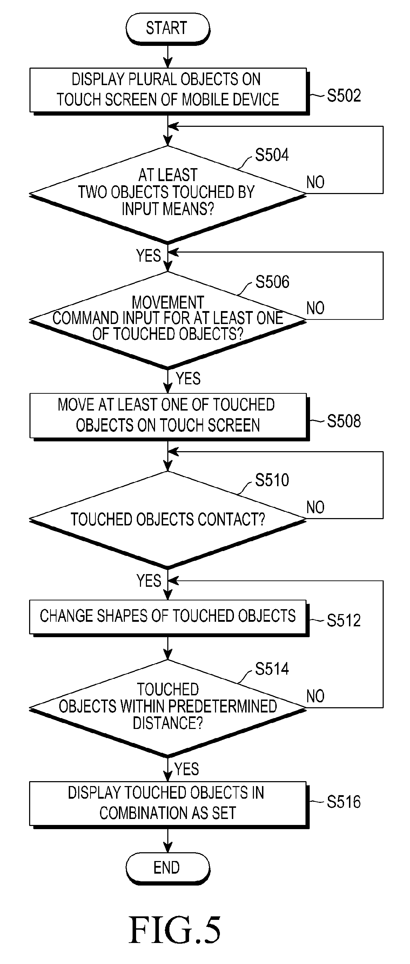

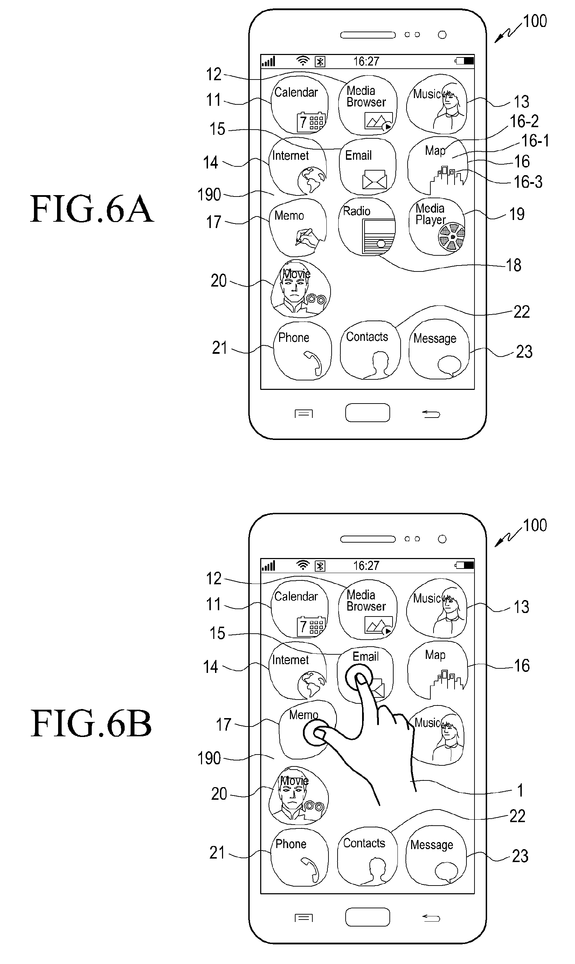

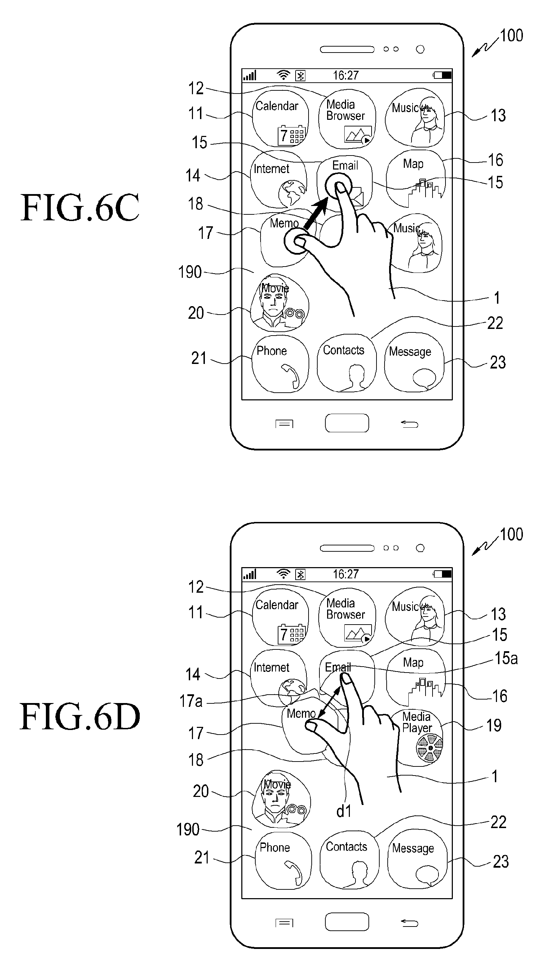

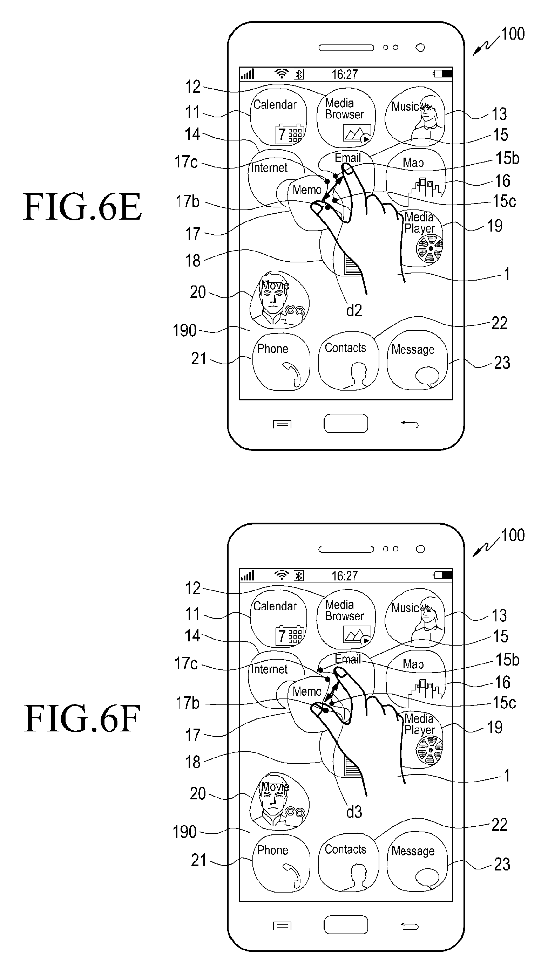

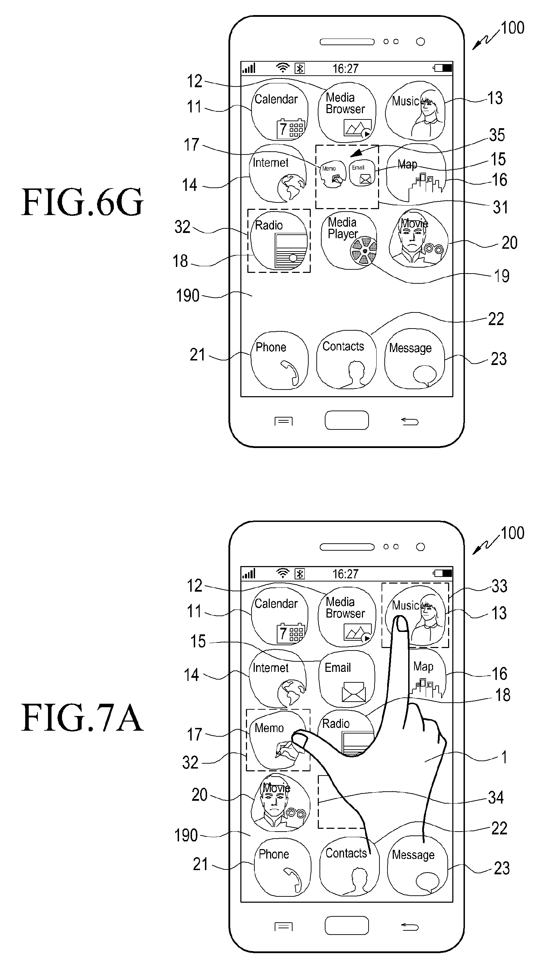

FIG. 5 is a flowchart illustrating a method of managing objects displayed on a touch screen according to an embodiment of the present disclosure, and FIGS. 6A, 6B, 6C, 6D, 6E, 6F, and 6G illustrate an operation of editing objects displayed on a touch screen according to an embodiment of the present disclosure.

Referring to FIGS. 5, 6A, 6B, 6C, 6D, 6E, 6F, and 6G, the controller 110 displays a plurality of objects 11 to 23 on the touch screen 190 at operation S502. The plurality of objects 11 to 23 may include various visual objects such as shortcut icons used to execute applications, widgets, icons representing text in various file formats, photos, and folders, or visual objects. The applications, which are executable in the mobile device 100, are stored in the mobile device 100 or downloadable to the mobile device 100 from an external application providing Web server.

Referring to FIGS. 6A, 6B, 6C, 6D, 6E, 6F, and 6G, the objects 11 to 23 are shown as, for example, shortcut icons used to execute applications on the touch screen 190. The icons 11 to 23 are arranged in a matrix as illustrated in FIG. 6A. At least a part of the icons 11 to 23 have different outline shapes. For example, the overall shapes of the icons 11 to 23 may be different and the icons 11 to 23 may have different curved outlines. For example, the icon 16 includes a background image 16-1, a title 16-2, and a unique image 16-3 in FIG. 6A. The background image 16-1 may be colored monotonously or in gradation. The background image 16-1 may also be a specific image or pattern. The title 16-2 is text identifying the object 16. The unique image 16-3 represents an application corresponding to the icon 16. Thus the unique image 16-3 may be an image such as a character, symbol, or the like or text such as a logo, which enables the user to readily identify the icon 16. The outline of the icon 16 may define the overall shape of the icon 16 and information about the icon 16 may be contained inside the icon 16. Therefore, there is no need for sparing an area outside the icon 16 for the title of the icon 16 or other information that describes the features of the icon 16.

The icons 21, 22 and 23 may be shortcut icons representing frequently used applications that are displayed at the bottom of the touch screen 190. The icons 21, 22 and 23 may be disposed at fixed positions of the touch screen 190. The icons 21, 22 and 23 may be editable and may be exchanged with the other icons 11 to 20. While a limited number of icons 11 to 23 are displayed on the touch screen 190 in FIG. 6A, more objects may be displayed on the touch screen 190.

Subsequently, the controller 110 determines whether at least two of objects displayed on the touch screen 190 have been touched by an input means 1 (input source (e.g., hand or finger)) at operation S504. At operation S504, the touch may be a long-pressed touch gesture. Referring to FIG. 6B, for example, the two objects 15 and 17 (herein, the first object 17 and the second object 15) may be touched respectively by an index finger and a thumb of the user. Three or more objects may be touched at the same time by the input means 1 of objects 11 to 23 displayed on the touch screen 190. Even though the two objects 15 and 17 are touched sequentially, as long as they are kept touched simultaneously for a predetermined time by the input means 1, the two objects 15 and 17 may be regarded as touched at the same time.

At operation S506, the controller 110 determines whether a movement command has been received for at least one of the touched objects 15 and 17 on the touch screen 100 from the input means 1. Upon receipt of the movement command, the controller 110 controls movement of the at least one touched object on the touch screen 100 at operation S508. The movement command may be a gesture of dragging a touch on at least one of the objects 15 and 17 on the touch screen 190 by the input means 1. For example, referring to FIG. 6C, the movement command may be a gesture of dragging a touch on the first object 17 or a touch on both the objects 15 and 17 on the touch screen 190 by the input means 1.

The controller 110 determines whether the objects 15 and 17 have been brought into contact at operation S510. For example, the controller 110 determines whether the first object 17 dragged in FIG. 6C has been moved toward the second object 15 and thus the outline of the first object 17 has been brought into contact with the outline of the second object 15. If the two objects 15 and 17 are close to each other, the controller 110 may determine that the objects 15 and 17 contact each other.

If the second object 15 contacts the first object 17, the controller 110 may change the outlines of the objects 15 and 17 at operation S512. When the outlines of the objects 15 and 17 are changed, the controller 110 may also control changing of the internal shapes of the objects 15 and 17. For example, the shape of a corner 17a of the first object 17 that contacts the second object 15 is changed in FIG. 6D. A corner 15a of the second object 15 contacting the first object 17 may also be changed in shape. As the controller 110 controls display of the changed shapes of the objects 15 and 17 on the touch screen 190 in this manner, contact between the objects 15 and 17 may be indicated. FIG. 6D illustrates that the objects 15 and 17 start to contact each other very partially. The distance between the points touched by the input means 1 (e.g., the points touched by the thumb and index finger of the user) is referred to as d1.

Referring to FIGS. 6E and 6F, the objects 15 and 17 change shapes when the objects 15 and 17 are in proximity to each other on the touch screen 190. In FIG. 6E, the distance d2 between the touched two points on the touch screen 190 is smaller than the distance d1 illustrated in FIG. 6D. In FIG. 6F, the distance d3 between the touched two points on the touch screen 190 is smaller than the distance d2 between the touched two points illustrated in FIG. 6E. Referring to FIGS. 6E and 6F, as the shape of the first object 17 changes, one or both of a concave portion 17b and a convex portion 17c may be created. The second object 15 also changes in shape and thus one or both of a concave portion 15b and a convex portion 15c may be created in the second object 15. As illustrated in FIG. 6E, the convex portion 15c of the second object 15 may fit into the concave portion 17b of the first object 17. In addition, the convex portion 17c of the first object 17 may be fit in the concave portion 15b of the second object 15. As the touched two points move closer to each other by the input means 1 and the distance between the touched objects 15 and 17 reduces, the controller 10 may control further changing of the shapes of the objects 15 and 17 on the touch screen 190.

Because when the touched objects 15 and 17 are brought into contact and their shapes are changed, the user may readily recognize that the objects 15 and 17 are about to be combined. As the touched objects 15 and 17 get closer, the shapes of the objects 15 and 17 become more changed. Therefore, the user may readily determine that the objects 15 and 17 are about to be merged. The shape changes of objects also change the outlines of the objects, which is different from scaling of the objects size.

To change the shapes of the objects displayed on the touch screen 190 as described above, the icons 11 to 23 may be created using a vector-based scheme. For example, the icon 16 contains the vector-based background image 16-1, the vector-based title 16-2, and the vector-based unique image 16-3. That is, the background image 16-1, the title 16-2, and the unique image 16-3 of the icon 16 may be formed using the vector-based scheme. The vector-based scheme refers to a method of storing background images, titles, unique images, and the like to be displayed on the touch screen 190 as lines. If the icon 16 is formed using the vector-based scheme, the display quality of the icon 16 is not degraded and the boundary between a line and a plane in the icon 16 is clear, despite rescaling or shape change of the icon 16. On the other hand, if the icons 11 to 23 are created in a bitmap-based scheme, rescaling of the icons 11 to 23 results in rendering the icons 11 to 23 in unnatural shapes because an image is rendered as a series of pixels. Accordingly, as the touch screen 190 gets larger in the mobile device 100, demands for vector-based icons are increasing, instead of bitmap-based icons of the related art.

Referring back to FIG. 5, operation S512 is optional. Specifically, when objects displayed on the touch screen 190 are combined without any change in the shapes of the objects, operation S512 may not be performed. In this case, the objects may be formed in a scheme other than the vector-based scheme, for example, in the bitmap-based scheme.

Subsequently, the controller 110 determines whether the touched objects 15 and 17 are within a predetermined distance to each other at operation S514. If the touched objects 15 and 17 are brought within a distance d3, the controller 110 combines the objects 15 and 17 and displays the combined objects as a set 35 on the touch screen 190 at operation S516. Referring to FIG. 6G, the objects 15 and 17 are displayed combined on the touch screen 190. The combined objects 15 and 17 are displayed in an area in which the second object 15 was displayed prior to the combining. That is, as the first object 17 approaches the displayed area 31 of the second object 15, the objects 15 and 17 may be combined. The set 35 is displayed in the area 31, including scaled-down images of the objects 15 and 17. The set 35 may be displayed over a background image of the touch screen 190 and may not require an additional image such as a folder image. Accordingly, after the at least two objects 15 and 17 are touched among the plurality of objects 11 to 20 displayed on the touch screen 190, the touched objects 15 and 17 are rapidly combined by one user gesture of making the objects 15 and 17 come closer to each other. As illustrated in FIG. 6G, the controller 110 may additionally rearrange the objects 18, 19 and 20 to fill up an area 32 in which the first object 17 was displayed prior to the combining and display the rearranged objects 18, 19 and 20 on the touch screen 190.

If the touched objects 15 and 17 are not yet brought within the distance d3 at operation S514, the controller 110 does not combine the objects 15 and 17.

In addition, if objects have attributes that prohibit them from being combined or objects more than a predetermined number are to be combined, the objects may not be combined. In this case, even though the objects 15 and 17 are brought into contact at operation S514, the controller 110 may control the shapes of the objects 15 and 17 to be kept unchanged. When the objects 15 and 17 are not combinable and come closer to each other or contact each other, the controller 110 may overlap the second object 15 over the first object 17. Therefore, if the objects 15 and 17 are not changed in shape despite contact between them, the user may readily recognize that the objects 15 and 17 cannot be combined. Further, the controller 110 controls the other untouched objects 11, 12, 13, 14, 16, 18, 19 and 20 not to be combined with the touched objects 15 and 17.

In an embodiment of the present disclosure, the objects 11 to 20 are outlined by random curved lines. The objects 11 to 20 are colored or have textures. The objects 11 to 20 are configured to act like human stem cells by containing all information about the objects 11 to 20 such as titles, characters, logos, and the like inside the objects 11 to 20. Advantageously, as environments of the touch screen 190 before and after generation of the set 35 are set so as to remind the user of a stem cell branching into more cells or vice versa, or a plurality of coexisting stem cells, a Graphic User Interface (GUI) resembling a simple, living organic body doing activities may be provided through the touch screen 190. In addition, an intuitive and user-friendly GUI may be provided by enabling the objects 11 to 20 to provide behavior like organic bodies in later-described operations of breaking, scaling, and locking the set 35 and an operation of processing an event occurring to a specific object.

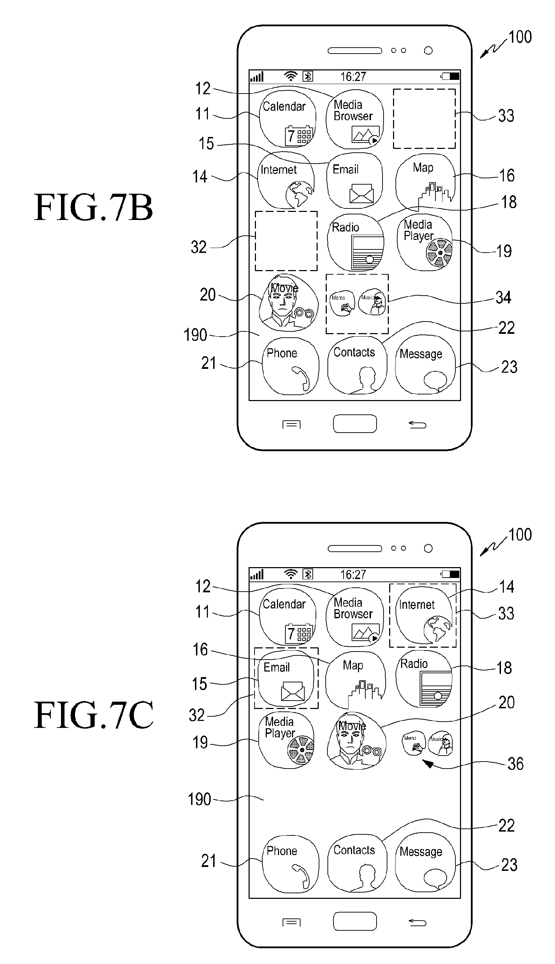

FIGS. 7A, 7B and 7C illustrate an operation of editing objects displayed on a touch screen according to another embodiment of the present disclosure.

Referring to FIGS. 7A and 7B, among the plurality of objects 11 to 20 displayed on the touch screen 190, the first object 17 located in a displayed area 32 and the object 13 (herein, the third object 13) located in a displayed area 33 are touched and dragged to an area 34 by the input means 1. Then the controller 110 may control display of the first and third objects 17 and 13 combined in the area 34 as illustrated in FIG. 7B.

Referring to FIG. 7C, after the touched first and third objects 17 and 13 are combined into a set 36, the controller 110 may rearrange the other objects 11, 12, 14, 15, 16, 18, 19, and 20 and the set 36 in order to fill the empty areas 32 and 33 with objects other than the first and third objects 17 and 13 on the touch screen 190.

While the two objects 13 and 17 are combined in FIGS. 7A, 7B and 7C by way of example, if three or more objects are touched at the same time and then collected by the input means 1, the controller 110 may also control display of the touched three or more objects in combination on the touch screen 190. For example, if touches of a predetermined number by the input source 1 (e.g., by three fingers, four fingers, or five fingers) is sensed at the same time on the touch screen 190 and then a predetermined gesture (e.g., a grab gesture) is sensed, the controller 110 may control combination of all objects on the touch screen 190 into a set and display of the set on the touch screen according to another embodiment of the present disclosure.

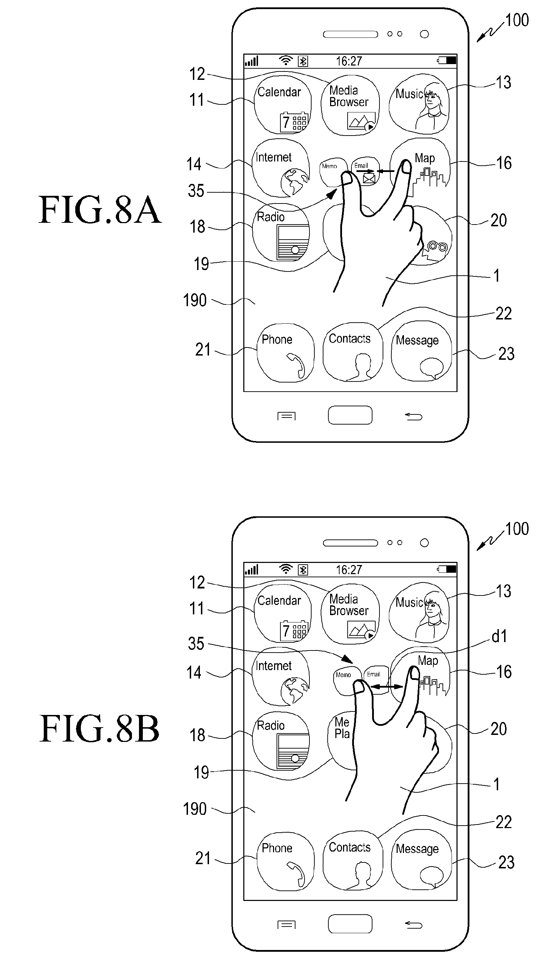

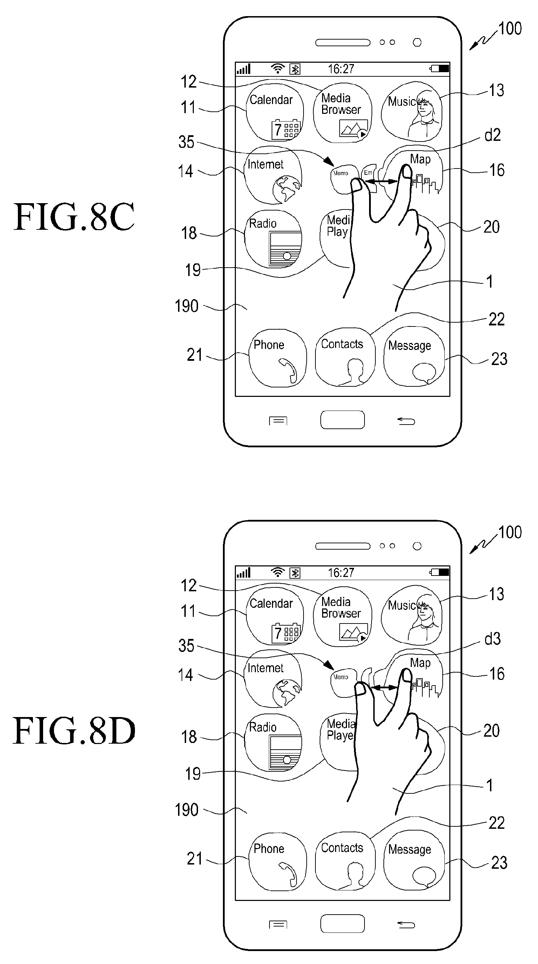

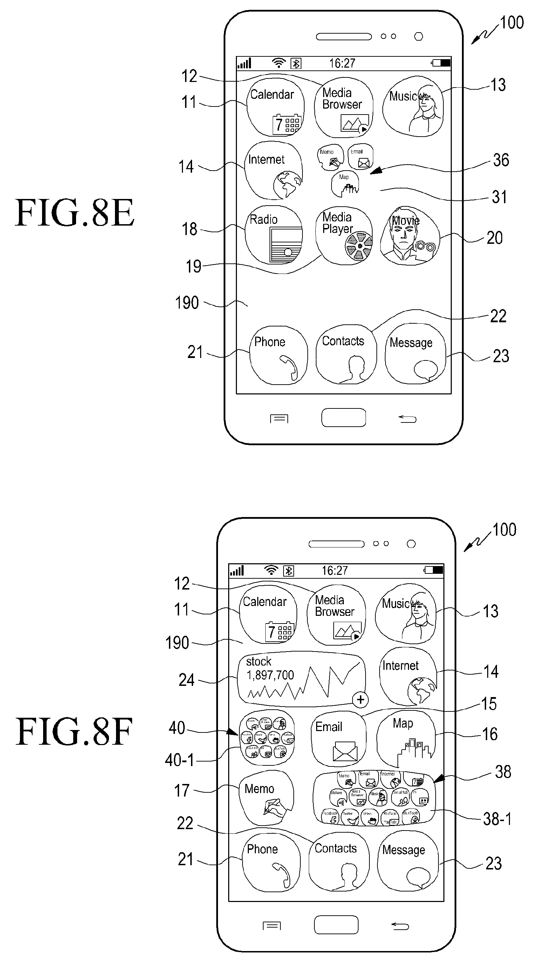

FIGS. 8A, 8B, 8C, 8D, 8E, and 8F illustrate an operation of editing objects displayed on a touch screen according to another embodiment of the present disclosure.

Referring to FIGS. 8A, 8B, 8C, 8D, 8E, and 8F, the user may combine the set 35 of the objects 15 and 17 with the object 16. For example, as illustrated in FIGS. 8B, 8C, and 8D, when the set 35 and the object 16 are touched (see FIG. 8A) and dragged to be within the distance d3 on the touch screen 190 by the input means 1 (e.g. the thumb and index finger of the user), the controller 110 may control display of the set 35 and the object 16 in combination on the touch screen 190 as illustrated in FIG. 8E. The controller 110 controls display of the combined objects 15, 16 and 17 in the object display area 31 and form a new set 36.

Referring to FIG. 8F, shortcut icons 11 to 17 and 21, 22 and 23, a widget 24, and a plurality of sets 38 and 40 are displayed on the touch screen 190. Referring to FIG. 8F, while the widget 24 is displayed in a 1x2 size in a structure where the shortcut icons 11 to 17 and 21, 22 and 23 are displayed in a 3x5 matrix on the touch screen 190, and the size of the widget 24 may be increased freely. The size of the set 40 may be substantially of the same size as each of the shortcut icons 11 to 17 and 21, 22 and 23. However, the set 38 may be larger than each of the shortcut icons 11 to 17 and 21, 22 and 23 and the size of the set 38 may also be increased freely. The set 38 may contain more objects than the set 40. As illustrated in FIG. 8F, the sets 38 and 40 may be outlined as indicated by reference numerals 38-1 and 40-1, respectively and scaled-down images of all objects contained in the sets 38 and 40 may reside inside the outlines 38-1 and 40-1 of the sets 38 and 40. Therefore, the user may readily identify the objects inside the sets 38 and 40. Alternatively, only the scaled-down images of a part of the objects included in the sets 38 and 40 may be displayed on the touch screen 190 (e.g., text may be omitted, etc.).

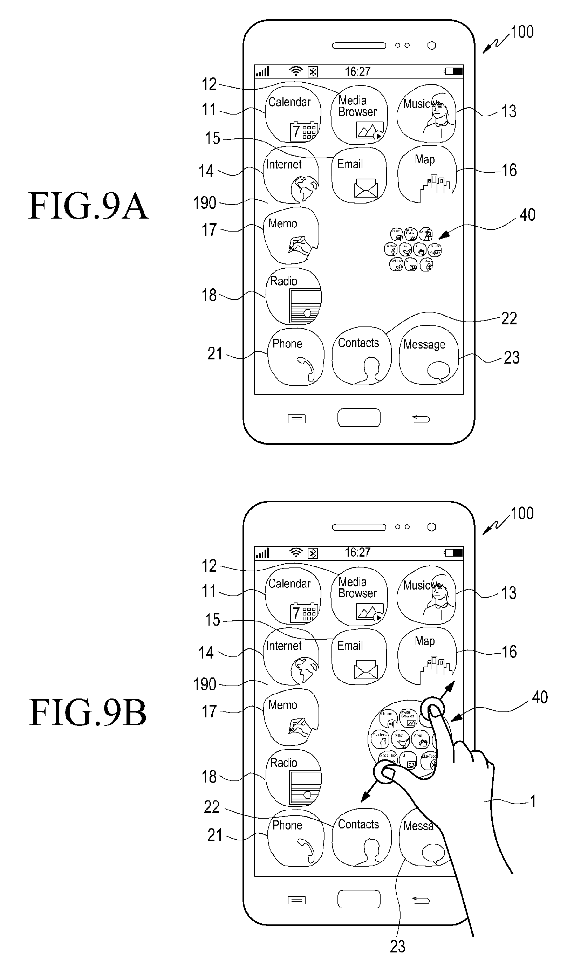

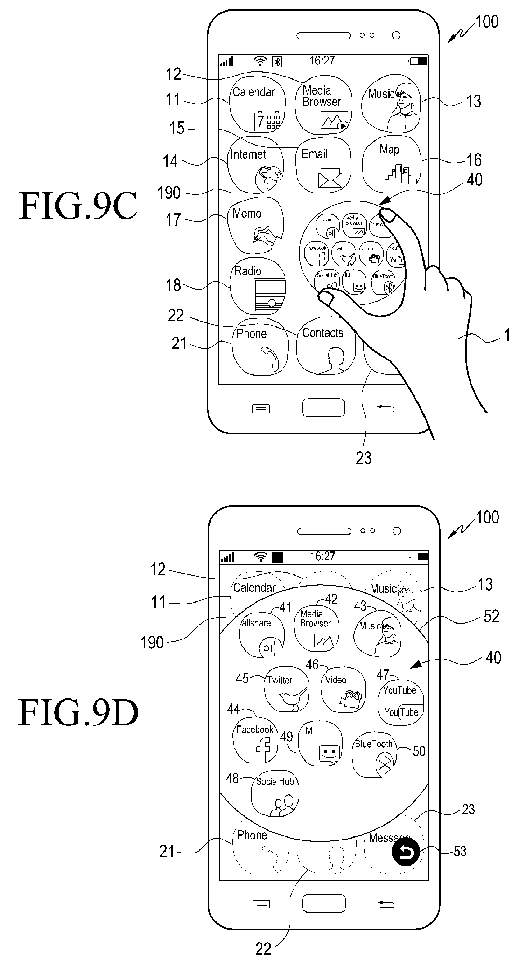

FIGS. 9A, 9B, 9C, and 9D illustrate a method of enlarging a set of combined objects on a touch screen according to an embodiment of the present disclosure.

Referring to FIG. 9A, if the set 40 of combined objects are displayed on the small touch screen 190, the user may have difficulty in identifying objects or icons inside the set 40. Thus, the user may zoom in or zoom out the set 40 by touching the set 40 a plurality of times with the input means 1, as illustrated in FIGS. 9B, 9C and 9D.

Specifically, if two points on the set 40 displayed on the touch screen 190 are touched by the input means 1 (e.g., the thumb and index finger of the user) as illustrated in FIG. 9B and the thumb and the index finger are moved away from each other, the controller 110 senses the pinch gesture and controls display of the set 40 zoomed-in on the touch screen 190 according to the pinch gesture as illustrated in FIG. 9C. As the set 40 gets enlarged, the controller 110 controls display of zoomed-in objects inside the set 40 on the touch screen 190.

FIG. 9D illustrates a state where the set 40 is enlarged to a maximum size on the touch screen 190. The set 40 contains a plurality of objects 41 to 50.

On the contrary, if two points on the set 40 displayed on the touch screen 190 are touched by the input means 1 (e.g. the thumb and index finger of the user) and then the thumb and the index finger are moved toward each other, the controller 110 may control reduce and display of the set 40 according to the distance between the thumb and the index finger on the touch screen 190.

Referring to FIGS. 9B, 9C and 9D, when the set 40 is zoomed in on the touch screen 190, the controller 110 controls additional display of a circular outline 52 shaped into a magnifying glass around the set 40. As the set 40 is enlarged, the circular outline 52 is larger as when the set 40 is reduced, the circular outline 52 is smaller. As a consequence, the set 40 may appear enlarged on the touch screen 190 by the magnifying glass. In addition, the controller 110 may control display of the objects 11, 12, 13, 21, 22 and 23 underlying the set 40 in such a manner that the objects 11, 12, 13, 21, 22 and 23 look blurry, and may control deactivation of the objects 11, 12, 13, 21, 22 and 23. In FIG. 9D, the blurry objects 11, 12, 13, 21, 22 and 23 are marked with dotted lines.

With the set 40 zoomed in on the touch screen 190 as illustrated in FIG. 9D, a back button 53 may be displayed on the touch screen 190. When the back button 53 is touched, the controller 110 may return the set 40 to its original size and display of the set 40 in the original size, as illustrated in FIG. 9A.

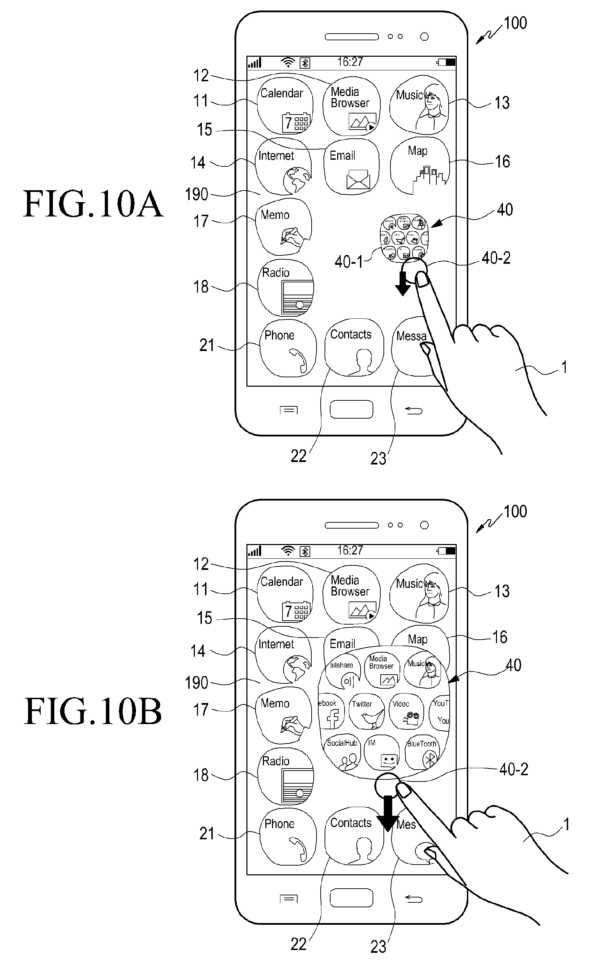

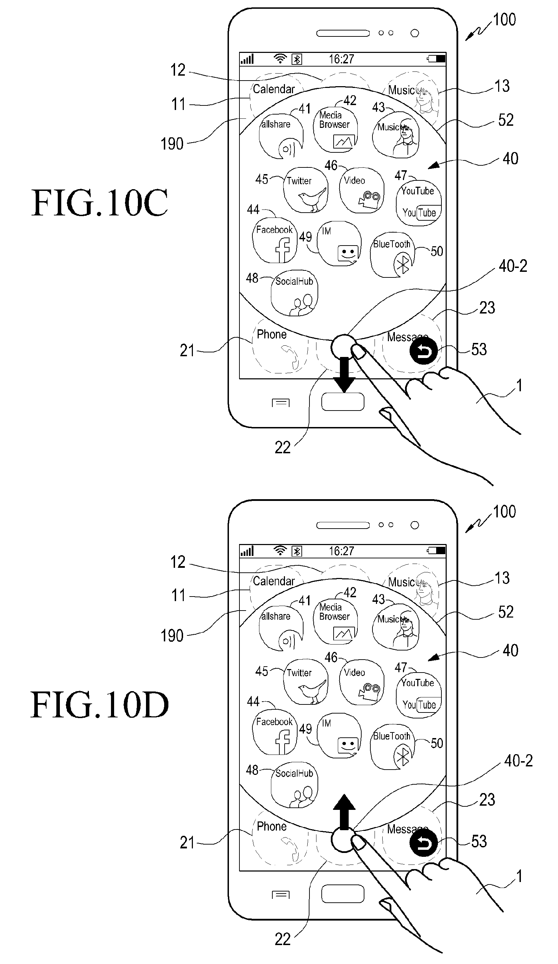

FIGS. 10A, 10B, 10C, and 10D illustrate a method of enlarging a set of combined objects on a touch screen according to another embodiment of the present disclosure.

Referring to FIG. 10A, if a point on the set 40 is touched by the input means 1 (e.g., the index finger of the user) and then the touch is dragged outwardly from the set 40, the controller 110 detects the drag gesture and controls display of the set 40 zoomed-in on the touch screen 190. For example, when the user touches a point 40-2 on the outline 40-1 of the set 40 with the input means 1 and drags the touch downward on the touch screen 190, the controller 110 recognizes the user gesture and controls enlarging of the set 40.

Additionally, as the set 40 is enlarged, the controller 110 may control display of objects size inside the set 40 on the touch screen 190.

Referring to FIG. 10C, when the set 40 is zoomed in to a maximum size on the touch screen 190, the plurality of objects 41 to 50 are contained in the set 40 are displayed.

Referring to FIG. 10D, with the set 40 zoomed-in on the touch screen 190, if a point on the set 40 is touched by the input means 1 and then the touch is dragged inwardly into the set 40, the controller 110 may detect the drag gesture and control display of the set 40 zoomed-out on the touch screen 190. For example, if the user touches the point 40-2 on the outline 40-1 of the set 40 with the input means 1 and then drags the touch upward on the touch screen 190, the controller 110 recognizes the user gesture and controls zoom-out of the set 40.

Referring to FIG. 10A, before the set 40 is zoomed in, the outline 40-1 may be drawn around the objects inside the set 40. The outline 40-1 may be similar to that of each of the neighboring icons 11 to 18 and 21, 22 and 23 in terms of shape and size. If many objects are inside the set 40, the set 40 and its outline 40-1 may be larger than each of the neighboring icons 11 to 18 and 21, 22 and 23. Referring to FIG. 10B, when the set 40 is zoomed in, the outline 40-1 of the set 40 may be only increased with the shape unchanged. Alternatively, when the set 40 is zoomed in, the outline 40-1 of the set 40 may be drawn in the form of a circular magnifying glass different from the shape of the outline 40-1.

In addition, the controller 110 may control display of the objects 11, 12, 13, 21, 22 and 23 under the set 40 in such a manner that the objects 11, 12, 13, 21, 22 and 23 look blurry, and may control deactivation of the objects 11, 12, 13, 21, 22 and 23. In FIGS. 10C and 10D, with the set 40 zoomed in on the touch screen 190, the back button 53 may be displayed on the touch screen 190.

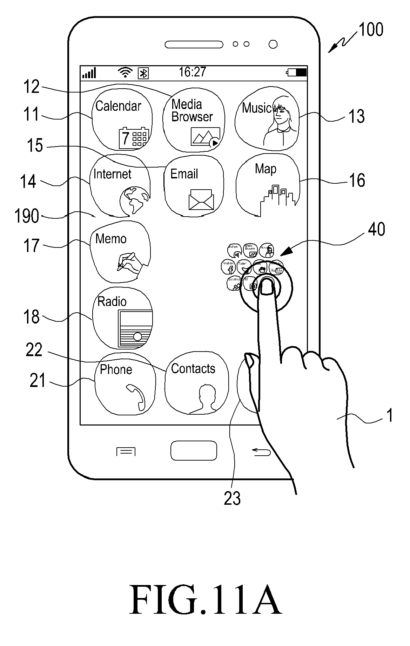

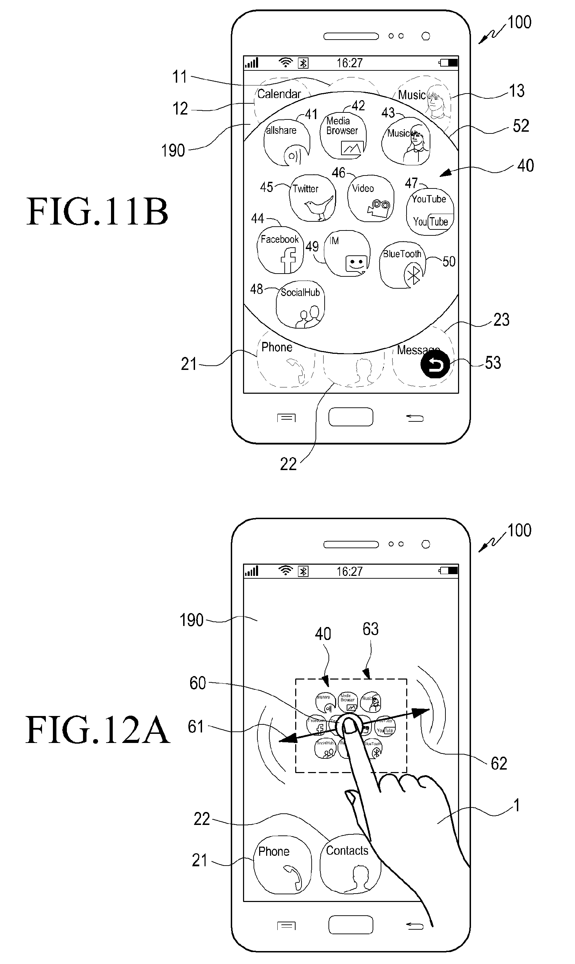

FIGS. 11A and 11B illustrate a method of enlarging combined objects on a touch screen according to another embodiment of the present disclosure.

Referring to FIGS. 11A and 11B, if the set 40 of combined objects are displayed on the small touch screen 190, the user may have difficulty in identifying objects or icons inside the set 40. Thus, the user may zoom in or zoom out the set 40 by touching the set 40 with the input means 1, as illustrated in FIGS. 11A and 11B.

For example, if a point on the set 40 displayed on the touch screen 190 is tapped by the input means 1 as illustrated in FIG. 11A, the controller 110 may sense the tap gesture and may control display of the set 40 zoomed-in on the touch screen 190 as illustrated in FIG. 11B. As the set 40 is enlarged, the controller 110 may control display of the objects zoomed-in inside the set 40 on the touch screen 190.

When the set 40 is zoomed in on the touch screen 190, the controller 110 may control display of the circular outline 52 shaped into a magnifying glass around the set 40. As the set 40 is zoomed in, the circular outline 52 gets larger and as the set 40 is zoomed out, the circular outline 52 gets smaller. As a consequence, the set 40 may appear enlarged on the touch screen 190 similar to a magnifying glass.

With the set 40 zoomed in on the touch screen 190, the back button 53 may be displayed on the touch screen 190. When the back button 53 is touched, the controller 110 may control display of the set 40 in the original size, as illustrated in FIG. 11A.

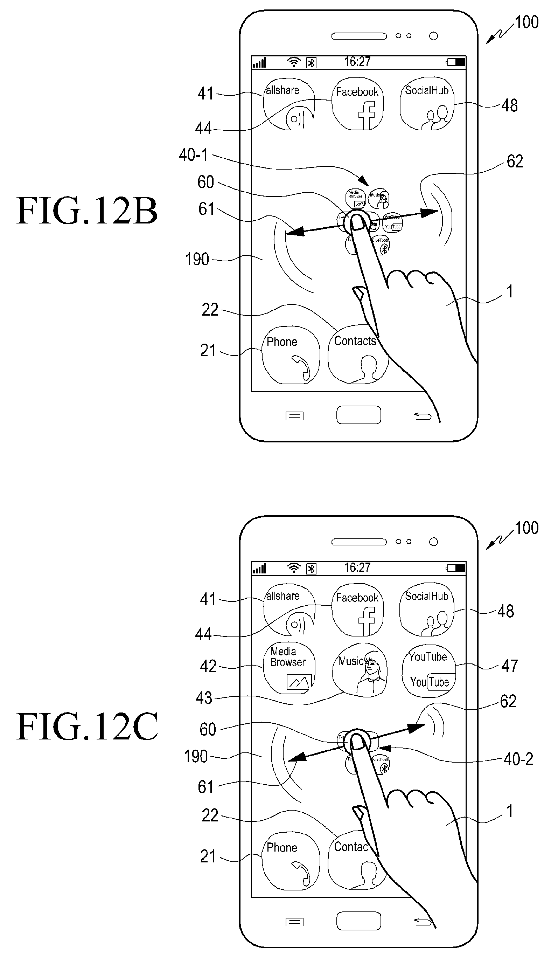

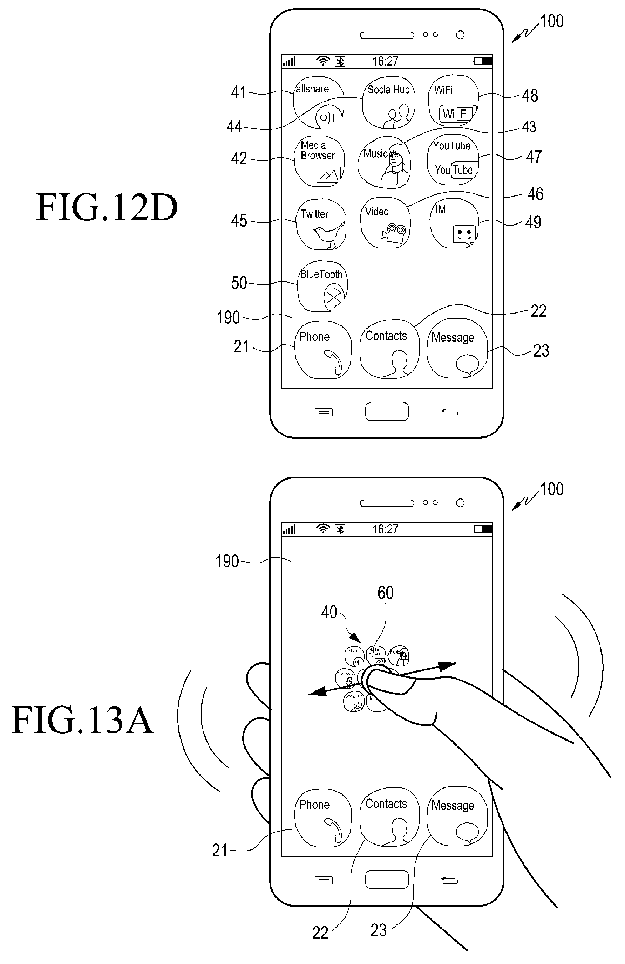

FIGS. 12A, 12B, 12C, and 12D illustrate a method of separating a set of combined objects on a touch screen according to an embodiment of the present disclosure.

Referring to FIGS. 12A and 12B, the set 40 contains, for example, 10 objects. While only the set 40 is displayed on the touch screen 190 for the convenience of description, other objects or icons may be added to the touch screen 190.

The user may separate the set 40 into the individual objects by touching a point 60 inside the set 40 with the input means 1 and then repeatedly shaking the input means 1 in both opposite directions 61 and 62 linearly for a short time (e.g., 2 seconds).

The shaking gesture includes at least a gesture of dragging a touch on the point 60 in one direction 61 and then dragging the touch in the opposite direction 62 with the input means 1. That is, the shaking gesture is a 2-drag gesture made sideways or back and forth with the input means 1 on the touch screen 190. When sensing a drag in the one direction 61 and then another drag in the opposite direction 62 on the touch screen 190, the controller 110 may be set to recognize the 2-drag gesture as a command to move the set 40 on the touch screen 190. Accordingly, it is preferable that the input means 1 is dragged sideways or back and forth at least three times (e.g., the input means 1 is dragged in the direction 61, the opposite direction 62, and then the direction 61), the controller 110 determines input of the shaking gesture. The drag gesture in the direction 61 or 62 may be made inside a displayed area 63 of the set 40 or partially outside the displayed area 63 of the set 40. As the shaking gesture is repeated more times on the touch screen 190, the controller 110 may control accelerate separation of the set 40 into the individual objects. In addition, as the input means 1 moves sideways for a larger distance by the sharking gesture, the controller 110 may control separation of the set 40 into the individual objects. As the input means 1 moves sideways more quickly by the sharking gesture, the controller 110 may control separation of the set 40 into the individual objects.

In FIG. 12B, upon sensing a shaking gesture of the input means 1 on the set 40, the controller 110 controls removal of some objects 41, 44 and 48 from the set 40 and display of the objects 41, 44 and 48 separate from the set 40. The objects 41, 44 and 48 may have been at the outermost of the set 40.

Referring to FIG. 12C, upon sensing of additional shaking gesture on a set 40-1 containing the remaining objects of the set 40 except for the objects 41, 44 and 48, the controller 110 controls removal of objects 42, 43 and 47 from the set 40-1 and display of the objects 42, 43 and 47 from the set 40-1 on the touch screen 190. The objects 42, 43 and 47 may have been at the outermost of the set 40-1.

Referring to FIG. 12D, upon sensing an additional shaking gesture on a set 40-2 containing the remaining objects 45, 46, 49 and 50 of the set 40-1, the controller 110 separates the set 40-2 into the objects 45, 46, 49 and 50 and controls display of the objects 45, 46, 49 and 50 on the touch screen 190.

As described above, upon sensing a touch on the point 60 inside the set 40 displayed on the touch screen 190 and repeated drags of the touch in opposite directions by the input means 1, the controller 110 may determine that a shaking gesture has been input and may separate the set 40 into the individual objects 41 to 50 sequentially. As the process of sequentially separating the set 40 into the individual objects reminds the user of sequential shaking grapes off a branch of grapes, starting from the outermost of the bunch of grapes, the user may readily intuitively understand the separation operation of the set 40. In addition, the user may readily input a separation command to the mobile device 100 by making a shaking gesture on the set 40.

Upon sensing a touch on the point 60 inside the set 40 displayed on the touch screen 190 and repeated drags of the touch in different directions on the touch screen 190 by the input means 1, the controller 110 may determine that a shaking gesture has been input and thus control separation of the set 40 into the objects 41 to 50 at one time and display of the objects 41 to 50 on the touch screen 190.

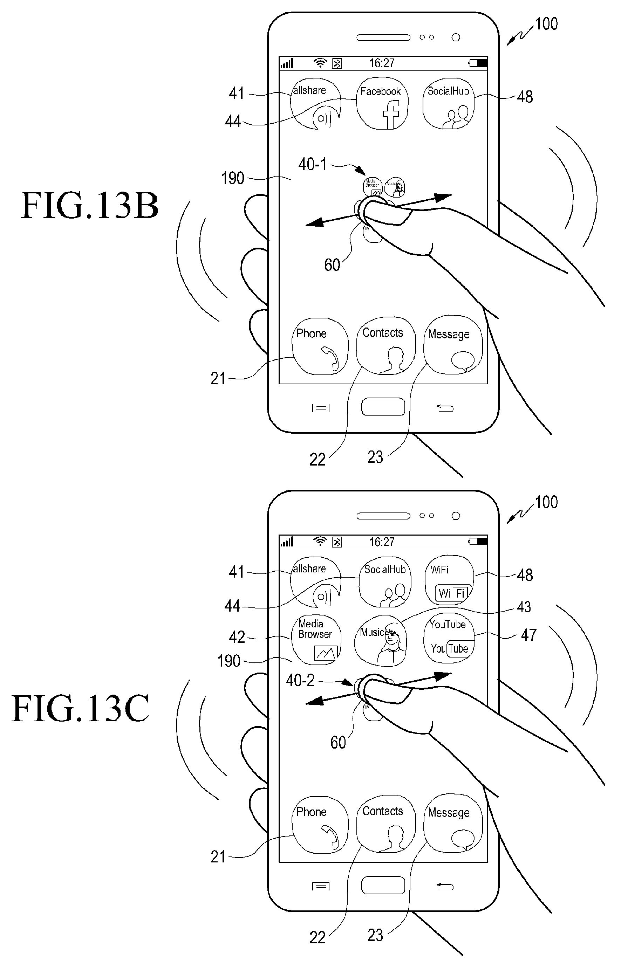

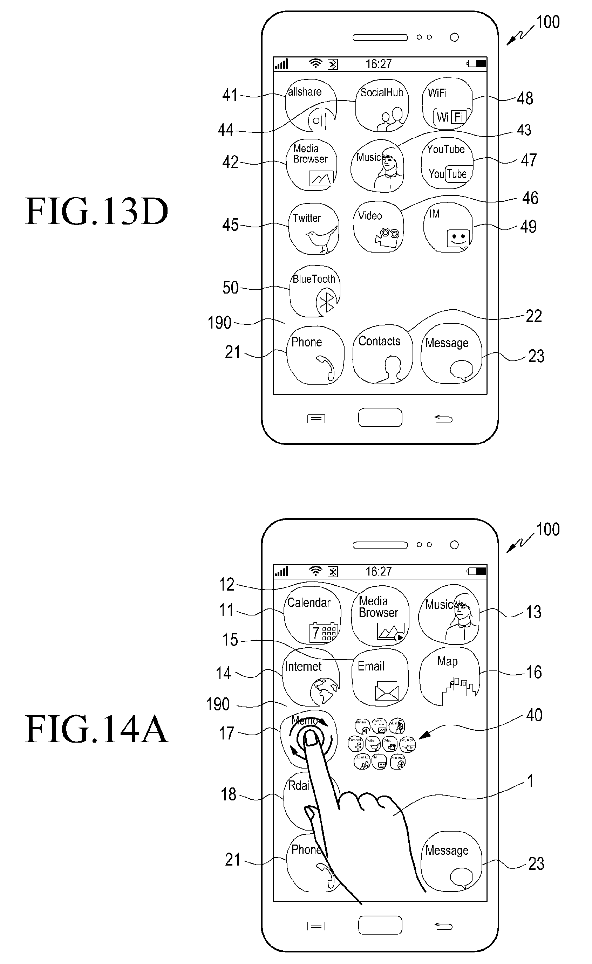

FIGS. 13A, 13B, 13C, and 13D illustrate a method of breaking up a set of combined objects on a touch screen according to another embodiment of the present disclosure.

Referring to FIGS. 13A, 13B, 13C, and 13D, upon sensing a touch of the input means 1 on the point 60 inside the set 40 and then a gesture of repeatedly shaking the mobile device 100 in different directions, the controller 110 may determine that a shaking gesture has been input. For example, when the user shakes the mobile device 100 sideways or back and forth while touching the set 40, the controller may sense the shaking of the mobile device through the sensor module 170 determine that a shaking gesture has been input, and separate the set 40 into the individual objects 41 to 50.

As the mobile device 100 is shaken more, the controller 110 may control an increase in the separation of the set 40 into the objects 41 to 50. As the mobile device 100 is shaken sideways for a longer distance, the controller 110 may control an increase in the separation of the set 40 into the objects 41 to 50. As mobile device 100 is shaken sideways faster, the controller 110 may control an increase in the separation of the set 40 into the objects 41 to 50.

Referring to FIGS. 13A, 13B, 13C, and 13D, the set 40 is sequentially separated into the individual objects 41 to 50 on the touch screen 190, as described before with reference to FIGS. 12A to 12D. In addition, upon sensing a shaking gesture, the controller 110 may control display of the individual objects 41 to 50 separate from the set 40 on the touch screen 190.

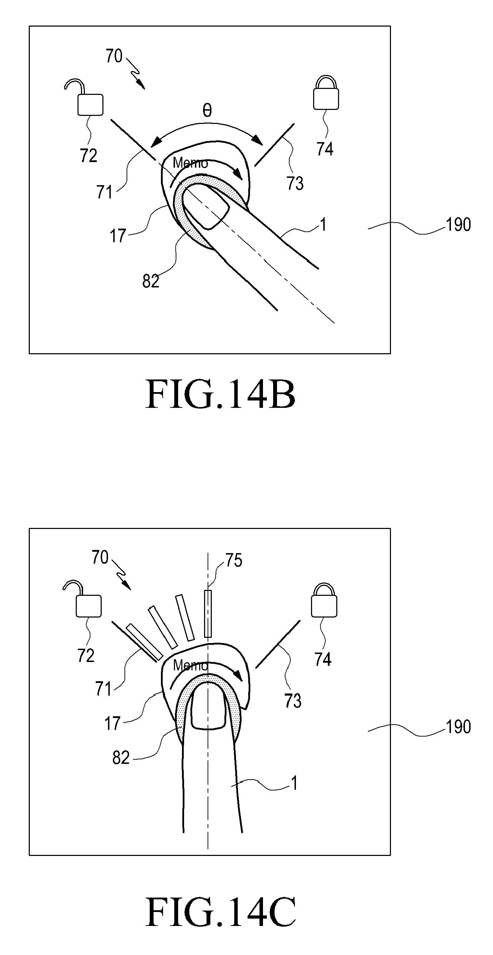

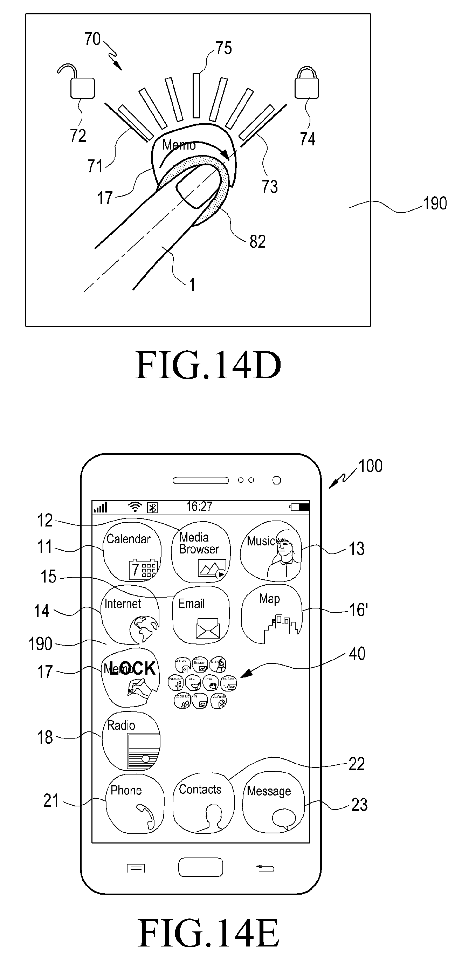

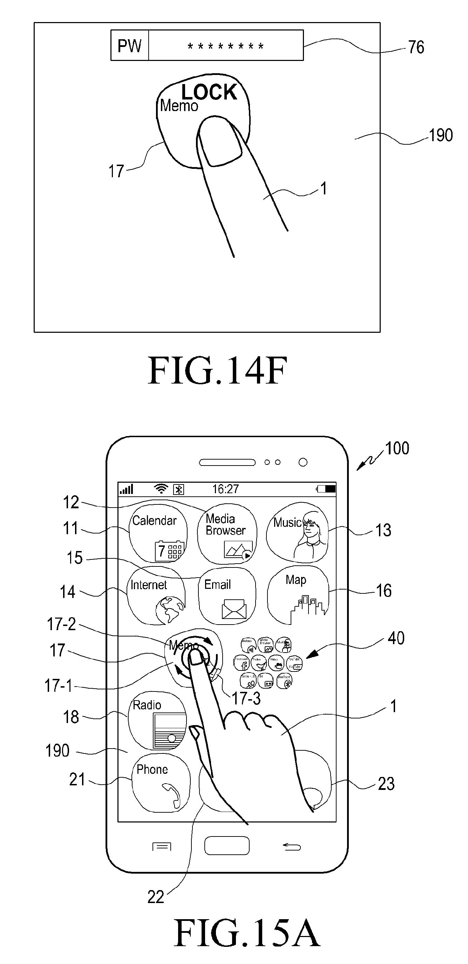

FIGS. 14A, 14B, 14C, 14D, 14E, and 14F illustrate a method of locking and unlocking an object displayed on a touch screen according to an embodiment of the present disclosure.

Referring to FIG. 14A, the user may need to lock a part of objects 11 to 18 and the set 40 displayed on the touch screen 190. For example, the user may write and store a simple note using a memo application in the mobile device 100. To protect privacy, it may be necessary to block other persons from accessing the note. In this case, the user may lock the object 17 representing the memo application. If the user wants to block other persons from viewing the user's call record, the user may lock the object 21 representing a phone application that provides a call record and a phone book, and receives or makes a call. Further, icons representing e-mail, instant messaging, Social Networking Service (SNS), a photo search application, and the like may be locked.

To lock the object 17, the user may touch the object 17 and then twist or rotate the touch at or above a predetermined angle with the input means 1. For example, when the user twists or rotate the touch by a predetermined angle with the input means 1, the controller 110 may control display of a password setting window (not shown) on the touch screen 190 to allow the user to set a password according to another embodiment of the present disclosure. The password setting window may be configured in such a manner that the user enters a predetermined drag pattern rather than input the password screen.

Referring to FIG. 14B, the controller 110 displays the plurality of objects 11 to 18 and the set 40 on the touch screen 190. Upon receipt of a locking command for the object 17, the controller 110 controls display of a locking indicator 70 indicating a locking progress on the touch screen 190. The locking command may be generated by a gesture of pressing or double-tapping the object 17 on the touch screen 190 with the input means 1.

FIG. 14B illustrates an example in which the locking indicator 70 is displayed on the touch screen 190. Referring to FIG. 14B, the locking indicator 70 is displayed in the vicinity of the touched object 17. Particularly, the locking indicator 70 is preferably displayed above the touched object 17 so that the locking indicator 70 may not be covered by the input means 1 (e.g. an index finger of the user). The locking indicator 70 includes a locking starting line 71. Additionally, the locking indicator 70 may include an opened lock image 72. The lock image 72 may represent that the touched object 17 has not yet been locked. The locking indicator 70 may further include a locking ending line 73 and a closed lock image 74. In FIG. 14B, the locking starting line 71 and the locking ending line 73 extend radially from the center of the object 17, apart from each other by a predetermined angle θ. The angle θ may be a twisting or rotating angle of the input means 1, for example, 90 degrees.

Referring to FIG. 14C, when the input means 1 twists the touch on the object 17, the controller 110 senses a twisted angle of the input means 1 and displays indication bars 75 in the locking indicator 70. In FIG. 14C, four indication bars 75 are displayed, which indicate that the object 17 has not yet been locked. As the input means 1 is twisted at a larger angle, more indication bars 75 are displayed. The indication bars 75 are filled between the lines 71 and 73, starting from the locking starting line 71.

The controller 110 determines whether the input means 1 has been twisted by the predetermined angle θ. If the input means 1 has been twisted at the predetermined angle θ, the controller 110 locks the touched object 17. Referring to FIG. 14D, when the touched object 17 is locked, the controller 110 may control display of indication bars 75 filled up between the locking starting and ending lines 71 and 73 and may notify that the object 17 has been locked completely.

Referring to FIG. 14E, text "LOCK" is displayed over the object 17 to indicate the locked state of the object 17. In an alternative embodiment of the present disclosure, the locked state of the object 17 may be indicated by displaying an image representing the locked state (e.g., a lock image) over the object 17 or changing the color of the object 17. Once the object 17 is locked, the controller 110 does not execute the application corresponding to the object 17 in the mobile device 100, even though the object 17 is touched.

Referring to FIGS. 14B, 14C and 14D, reference numeral 82 denotes an area touched by the input means 1 on the touch screen 190. The controller 110 may determine whether the twisted or rotated angle of the input means 1 to lock an object has been changed by sensing a change in the position of the touched area 82.

Referring to FIG. 14F, an operation of unlocking the locked object 17 is illustrated. Specifically, when the user taps the locked object 17 once with the input means 1, the controller 110 may control display of a password input window 76 on the touch screen 190 to allow the user to enter a password. If the user enters a valid password in the password input window 76, the controller 110 may control unlocking of the object 17. The password input window 76 may be configured in such a manner that the user enters a predetermined drag pattern rather than input the password. When the unlocked object 17 is touched by the input means 1, the controller 110 controls execution of the application corresponding to the object 17 in the mobile device 100.

While the touched object 17 is shown in FIGS. 14A, 14B, 14C, 14D, 14E, and 14F as displayed stationary on the touch screen 190, when the input means 1 touches the object 17 and twists the touch on the object 17, the controller 110 may control display of the object 17 rotated on the touch screen 190. If the object 17 is rotated at the predetermined angle θ on the touch screen 190, the controller 110 may control locking of the object 17.

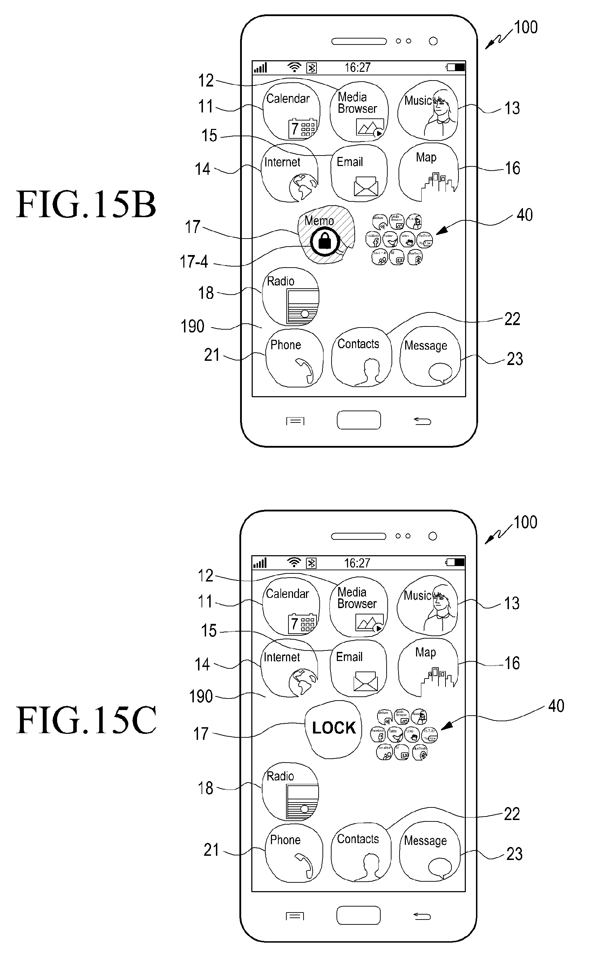

FIGS. 15A, 15B and 15C illustrate a method of locking and unlocking an object displayed on a touch screen according to another embodiment of the present disclosure.

Referring to FIG. 15A, the object 17 corresponding to the memo application includes a vector-based icon background 17-1, a vector-based title 17-2, and a vector-based image 17-3 of the object 17. When the user inputs a locking command by touching the object 17 corresponding to the memo application and then twisting or rotating the touch on the object 17 at the predetermined angle θ with the input means 1, the controller 110 senses the locking command and locks the object 17.

Referring to FIG. 15B, the locked state of the object 17 may be indicated by displaying a lock image 17-4 over the object 17. In addition, the locked state of the object 17 may be emphasized by shading the object 17 with slashed lines.

Referring to FIG. 15C, the locked state of the object 17 may be indicated by displaying the text "LOCK" over the object 17, without at least one of the vector-based title 17-2 and the vector-based image 17-3 in the locked object 17. The controller 110 may change the image of the object 17 to another image without displaying any of the vector-based icon background 17-1, the vector-based title 17-2, and the vector-based image 17-3. As the locked object 17 is not known to anyone else except for the user, user privacy can be protected.

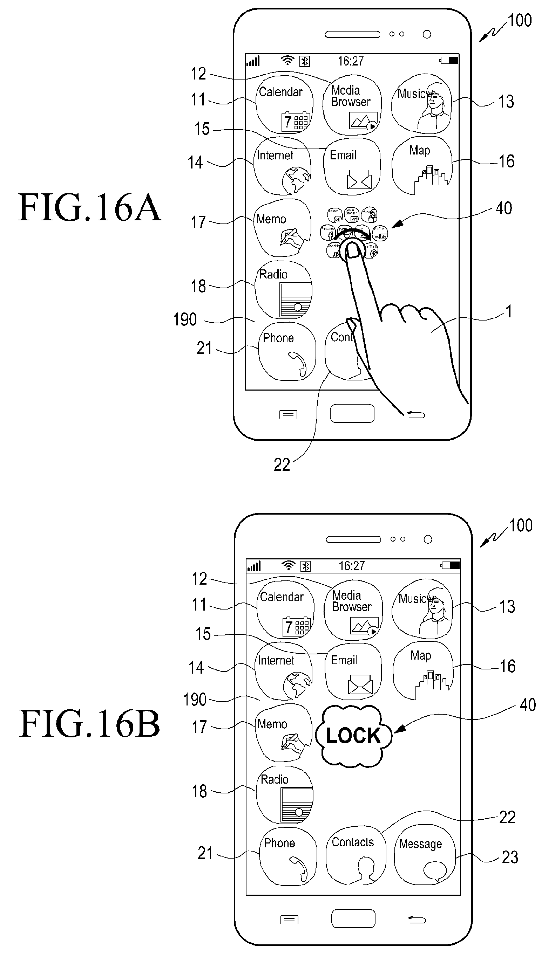

FIGS. 16A and 16B illustrate a method of locking and unlocking an object displayed on a touch screen according to another embodiment of the present disclosure.

In another embodiment of the present disclosure, the set 40 may be locked and the image of the locked set 40 may be changed.

For example, referring to FIG. 16A, the set 40 includes a plurality of objects, each object containing scaled-down version of a vector-based icon background, a vector-based title, and a vector-based image. When the user inputs a locking command by touching the set 40 and twisting or rotating the touch at the predetermined angle θ with the input means 1, the controller 110 senses the locking command and locks the set 40. Once the set 40 is placed in the locked state, the controller 110 controls the objects included in the set 40 to not be executed.

Referring to FIG. 16B, when the set 40 is locked, the controller 110 indicates the locked state of the set 40 by displaying the text "LOCK" over the set 40. Further, the controller 110 may display only the outline of the set 40 without displaying any of the objects included in the locked set 40. The locked set 40 may be changed to another image. Accordingly, since the set 40 is shown as locked, the objects included in the locked set 40 are not exposed to anyone else except for the user and user privacy can be protected. In an alternative embodiment of the present disclosure, the controller 110 may control display of scaled-down images of the objects included in the locked set 40.

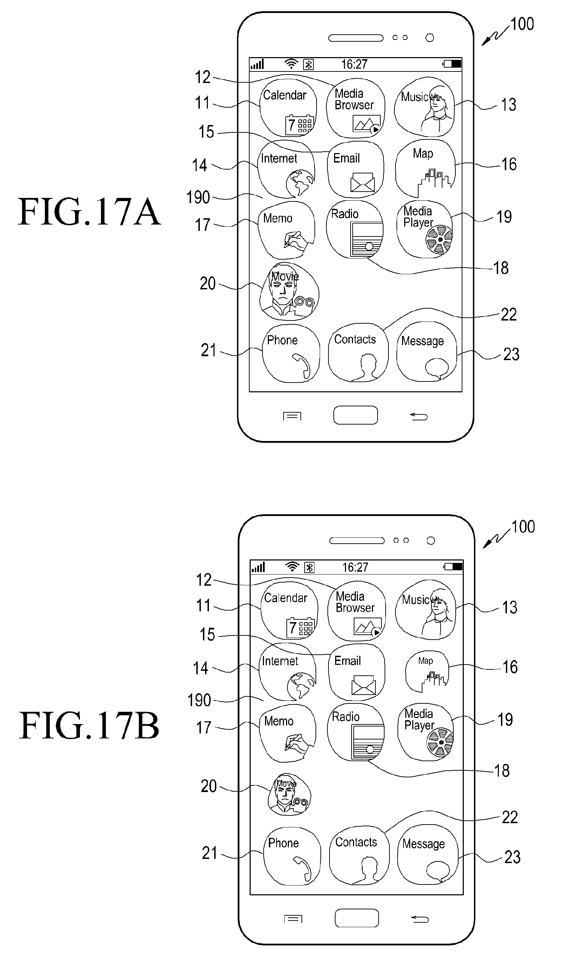

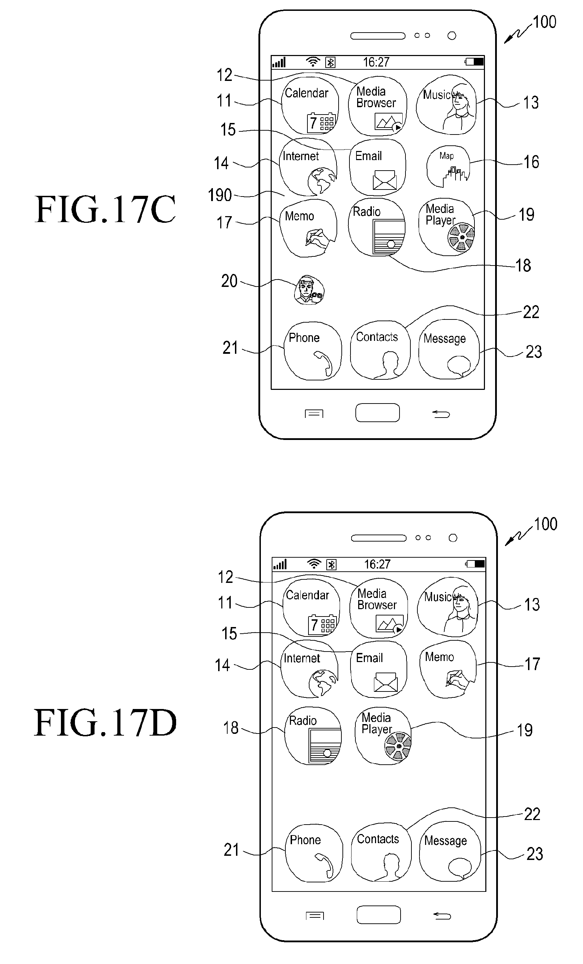

FIGS. 17A, 17B, 17C, and 17D illustrate a method of managing objects displayed on a touch screen based on use of the objects according to an embodiment of the present disclosure.

Referring to FIG. 17A, the plurality of objects 11 to 23 are displayed on the touch screen 190. As the user frequently selects some of the objects 11 to 23, applications corresponding to the selected objects may be executed frequently in the mobile device 100. On the other hand, other objects may be infrequently used. If infrequently used objects continuously occupy a part of the small touch screen 190, the touch screen 190 may not be used efficiently when there is a lack of space for displaying frequently used objects.

In an embodiment of the present disclosure, the objects 11 to 23 may appear like organic bodies that actively live and progressively die by changing at least one of the sizes, colors, and shapes of the objects 11 to 23 according to the selection counts of the objects 11 to 23, that is, the execution counts or latest unused time periods of the applications corresponding to the objects 11 to 23 in the mobile device 100.

Referring to FIG. 17B, the controller 110 controls display of the plurality of objects 11 to 23 on the touch screen 190. The controller 110 stores the counts of selecting the objects 11 to 23 by the input means 1 and executing the selected objects 11 to 23 in the mobile device 100. If the execution count of at least one of the objects 11 to 23 displayed on the touch screen 190 during a first time period (e.g. the latest 4 weeks) is smaller than a predetermined value, the controller 110 replaces an initial image of the object with another image and controls display of the object. For example, the controller 110 may control display of the objects 11 to 23 in different sizes according to the selection and execution counts of the objects 11 to 23. In FIG. 17B, the objects 16 and 20 are displayed smaller than the other objects 11 to 15 and 17 to 19 on the touch screen 190, which indicates that the objects 16 and 20 are selected and executed by the input means 1 less than the other objects 11 to 15 and 17 to 19.

In an alternative embodiment of the present disclosure, referring to FIG. 17C, the objects 16 and 20 are smaller than the other objects 11 to 15 and 17 to 19. Particularly, the object 20 is smaller than the object 16. This indicates that the objects 16 and 20 have been selected and executed less than the other objects 11 to 15 and 17 to 19 and the selection and execution count of the object 16 is less than the object 20 in the mobile device 100.

If the scaled-down objects 16 and 20 are selected by the input means 1 and executed in the mobile device 100 in FIG. 17B or 17C, the controller 110 may control display of the objects 16 and 20 in the original sizes on the touch screen as illustrated in FIG. 17A.

However, if the scaled-down objects 16 and 20 are not executed during a second time period (e.g., 2 weeks) following the first time period (e.g., the latest 4 weeks), the controller 110 may control removal of the objects 16 and 20 from the touch screen 190. That is, the controller 110 may automatically delete the objects 16 and 20 from a current screen of the touch screen 190.

Referring to FIG. 17D, after the objects 16 and 20 are removed from the touch screen 190, the controller 110 may rearrange the other objects 11 to 15 and 17 to 19 and control display of the rearranged objects 11 to 15 and 17 to 19 on the touch screen 190.

For example, even though the objects 16 and 20 are removed from a home screen displayed on the touch screen 190, the objects 16 and 20 may still exist on other screens (e.g., a main menu screen).

Even though the objects 16 and 20 are removed from the home screen or the main menu screen, applications corresponding to the objects 16 and 29 are not uninstalled. Therefore, even though the objects 16 and 20 are removed from the home screen or the main menu screen, the objects 16 and 20 and the applications corresponding to the objects 16 and 20 may still be stored in the memory 175 and displayed on the touch screen 190 at any time.

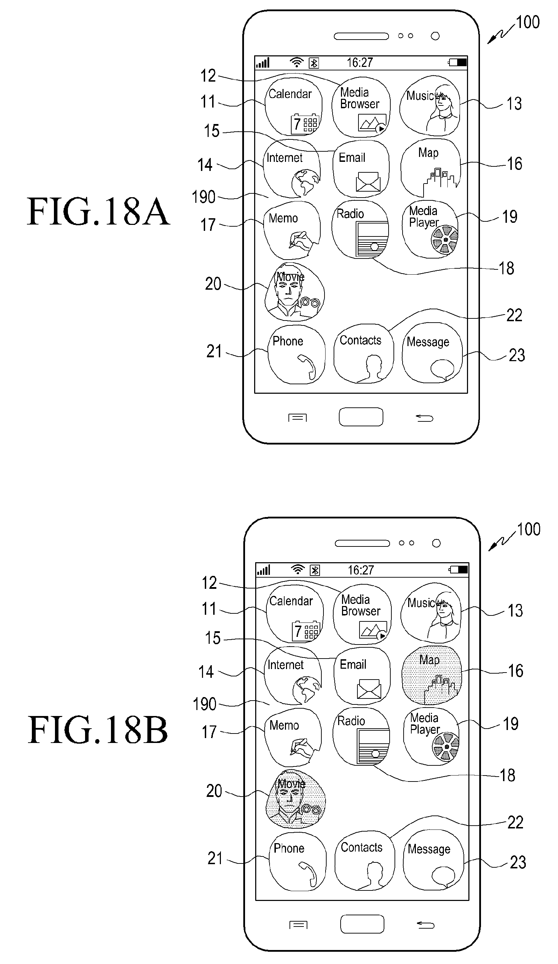

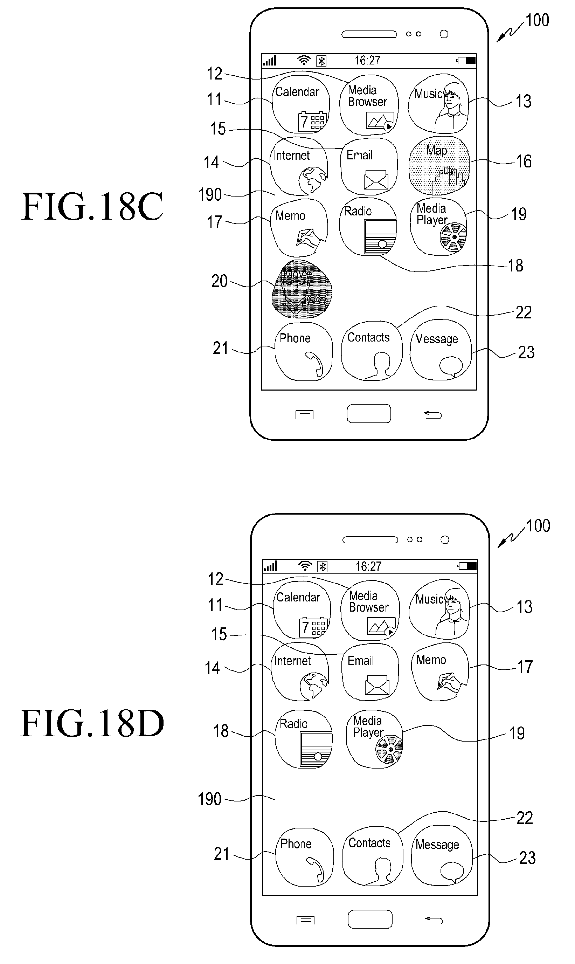

FIGS. 18A, 18B, 18C, and 18D illustrate a method of managing objects displayed on a touch screen based on use of the objects according to another embodiment of the present disclosure.

Referring to FIG. 18A, in another embodiment of the present disclosure, the objects 11 to 23 may appear like organic bodies that actively live and progressively die by changing the colors of the objects 11 to 23 according to the selection counts of the objects 11 to 23, that is, the execution counts or latest unused time periods of the applications corresponding to the objects 11 to 23 in the mobile device 100.

Referring to FIG. 18B, the controller 110 may store the counts of executing the selected objects 11 to 23 in the mobile device 100 and may display the objects 11 to 23 in different colors according to their execution counts. In FIG. 18B, the objects 16 and 20 are displayed with a low color density or in an achromatic color (e.g. gray), relative to the other objects 11 to 15 and 17 to 19. This indicates that the objects 16 and 20 are executed less than the other objects 11 to 15 and 17 to 19 in the mobile device 100.

In an alternative embodiment of the present disclosure, referring to FIG. 18C, the objects 16 and 20 are displayed with lower color densities than the other objects 11 to 15 and 17 to 19. Particularly, the object 20 is displayed with a lower color density than the object 16. This means that the objects 16 and 20 have been executed less than the other objects 11 to 15 and 17 to 19 and the selection and execution count of the object 16 is less than the object 20 in the mobile device 100.

If the scaled-down objects 16 and 20 are selected by the user and executed in the mobile device 100 in FIG. 18B or 18C, the controller 110 may control display of the objects 16 and 20 with the original color densities on the touch screen as illustrated in FIG. 18A.

However, if the scaled-down objects 16 and 20 are not executed continuously in the mobile device 100, the controller 110 may control removal of the objects 16 and 20 from the touch screen 190.

Referring to FIG. 18D, after the objects 16 and 20 are removed from the touch screen 190, the controller 110 may rearrange the other objects 11 to 15 and 17 to 19 and control display of the rearranged objects 11 to 15 and 17 to 19 on the touch screen 190.

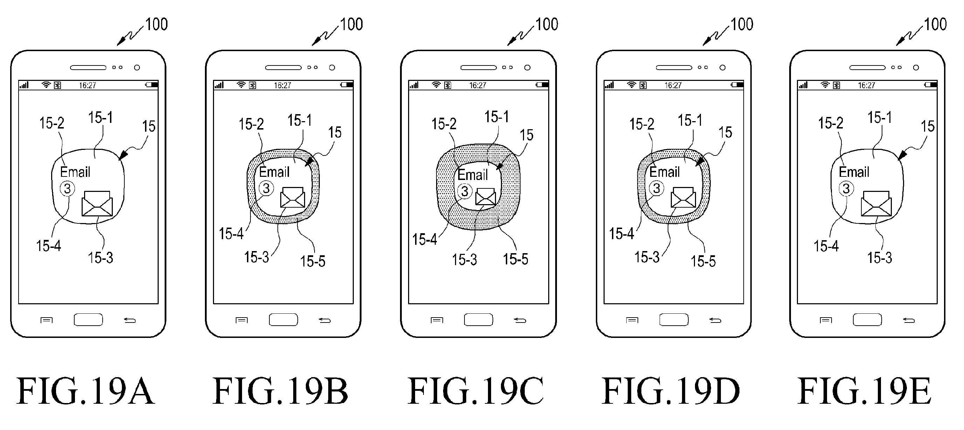

FIGS. 19A, 19B, 19C, 19D, and 19E illustrate a method of displaying a motion effect to an object on a touch screen according to an embodiment of the present disclosure.

Referring to FIGS. 19A, 19B, 19C, 19D, and 19E, upon generation of an event to an object displayed on the touch screen 190, the controller 110 may apply a motion effect to the object. For example, when an e-mail is received in an e-mail application, e-mail reception may be indicated on an e-mail icon 15 on the touch screen 190. In FIG. 19A, reception of three e-mails is indicated on the e-mail icon 15. When an event occurs to the object 15, the controller 110 may control repeated contraction and expansion of the size of the object 15 on the touch screen 190.

Referring to FIGS. 19A, 19B, 19C, 19D, and 19E, after an event occurs to the object 15, the size of the object 15 gradually decreases and then gradually increases with passage of time.

While the object 15 is gradually contracting, the controller 110 may control gradual contraction of a unique image 15-3 of the object 15.

Further, while the object 15 is gradually contracting, the controller 110 may control changing of the color of a background image 15-1 of the object 15.

Despite the gradual reduction of the object 15 in size, the controller 110 may keep a title 15-2 and an incoming message indicator 15-4 unchanged in size.

Additionally, when the object 15 is reduced in size, the controller 110 may create a shadow 15-5 surrounding the object 15. The shadow 15-5 extends from the outline of the object 15. As the object 15 is gradually contracted, the controller 110 may control gradual enlargement of the shadow 15-5.

While the object 15 is being enlarged gradually, the controller 110 may control gradual enlargement of the unique image 15-3 of the object 15.

While the object 15 is being enlarged gradually, the controller 110 may control changing of the color of the background image 15-1 of the object 15.

Despite the gradual enlargement of the object 15, the controller 110 may keep the title 15-2 and the incoming message indicator 15-4 unchanged in size.

While the object 15 is being enlarged gradually, the controller 110 may control gradual contraction of the shadow 15-5.

The controller 110 may provide an effect to the object 15 so that the object 15 looks like an organic part by repeating the above-described contraction and expansion of the object 15 as illustrated in FIGS. 19A, 19B, 19C, 19D, and 19E. Therefore, the user may recognize occurrence of an event related to the object 15. Further, the embodiment of the present disclosure enables the user to recognize event occurrence more intuitively, compared to simple indication of the number of event occurrences on the object 15.

As is apparent from the above description, the present disclosure is advantageous in that a plurality of objects displayed on a small screen can be managed efficiently in a device equipped with a touch screen. The plurality of objects displayed on the touch screen can be combined and separated rapidly by simple user gestures. The plurality of objects displayed on the touch screen can be locked and unlocked readily by simple user gestures. Furthermore, icons representing less frequently used applications can be deleted automatically on the touch screen. Therefore, a user can efficiently manage objects representing a plurality of applications stored in a mobile device by a simple user gesture.

It should be noted that the various embodiments of the present disclosure as described above involve the processing of input data and the generation of output data. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems. Also, functional computer programs, instructions, and instruction segments for accomplishing the present disclosure can be easily construed by programmers skilled in the art to which the present disclosure pertains.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of managing a plurality of objects displayed on a touch screen, the method comprising:
determining whether at least two of the plurality of objects have been touched simultaneously on the touch screen;
determining whether at least one of the at least two objects has moved on the touch screen, if the at least two objects have been touched simultaneously;
determining a distance between the touched at least two objects, if the at least one of the at least two objects has moved on the touch screen;
combining the touched at least two objects into a set, if the distance between the touched at least two objects is less than a predetermined value; and
displaying the set on the touch screen.

2. The method of claim 1, wherein the combining of the touched at least two objects comprises reducing a size of each of the combined at least two objects.

3. The method of claim 2, wherein the reducing of the size of the combined at least two objects comprises scaling each of the combined at least two objects.

4. The method of any preceding claim, further comprising, when the touched at least two objects contact each other on the touch screen, changing a shape of at least one of the touched at least two objects and displaying the changed at least one of the touched at least two objects.

5. The method of claim 4, further comprising, when the touched at least two objects contact each other on the touch screen if the distance between the touched at least two objects decreases, the changing the shapes of at least one of the touched at least two objects is based on the distance between the touched at least two objects.

6. The method of any preceding claim, further comprising, if the set and one of the plurality of objects are touched simultaneously and moved within a predetermined distance, combining the touched object with the set into a new set and displaying the new set on the touch screen.

7. The method of any preceding claim, wherein the displaying of the set comprises displaying the set in a display area for one of the objects.

8. Apparatus comprising:
a touch screen configured to display a plurality of objects; and
a controller configured to determine a distance between at least two objects, if the at least two objects of the plurality of objects have been touched simultaneously on the touch screen and at least one of the at least two objects has moved on the touch screen, and if the distance between at least two objects is less than a predetermined value, to combine the at least two objects into a set and display the set on the touch screen.

9. The apparatus of claim 8, wherein the controller reduces a size of each of the combined at least two objects to combine the at least two objects into the set.

10. The apparatus of claim 8 or claim 9, wherein the controller scales the size of each of the combined at least two objects to combine the at least two objects.

11. The apparatus of any one of claims 8 to 10, wherein, when the touched at least two objects contact each other on the touch screen, the controller changes the shapes of at least one of the touched at least two objects and displays the changed at least one of the touched at least two objects.

12. The apparatus of claim 11, wherein, when the touched at least two objects contact each other on the touch screen, if the distance between the touched at least two objects decreases, the controller changes the shapes of at least one of the touched at least two objects based on the distance between the touched at least two objects.

13. The apparatus of any one of claims 8 to 12, wherein if the set and one object of the plurality of objects are touched simultaneously and moved within a predetermined distance, the controller combines the touched object with the set into a new set and displays the new set on the touch screen.

14. The apparatus of any one of claims 8 to 13, wherein the set is displayed in a display area for one of the objects.

15. Apparatus arranged to implement a method in accordance with any one of claims 1 to 7.
